Europäisches Patentamt

European Patent Office

Office européen des brevets

(19)

(11) **EP 1 030 166 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(51) Int Cl.:
*G01C 21/34* *(2006.01)*

(21) Anmeldenummer: **00102386.0**

(22) Anmeldetag: **03.02.2000**

(54) **Verfahren zur Navigation eines Objekts**

Method for navigation of an object

Méthode pour la navigation d' un objet

(84) Benannte Vertragsstaaten:
**AT BE CH CY DE DK ES FI FR GB GR IE IT LI LU MC NL PT SE**

(30) Priorität: **18.02.1999 DE 19906863**

(43) Veröffentlichungstag der Anmeldung:
**23.08.2000 Patentblatt 2000/34**

(73) Patentinhaber: **Nokia Corporation**
**02150 Espoo (FI)**

(72) Erfinder:
- **Ratert, Matthias**
  **48356 Nordwalde (DE)**
- **Serafat, Reza**
  **44789 Bochum (DE)**

(74) Vertreter: **Becker Kurig Straus**
**Patentanwälte**
**Bavariastrasse 7**
**80336 München (DE)**

(56) Entgegenhaltungen:
**EP-A- 0 943 896          WO-A-93/03452**
**DE-A- 19 651 146**

- **FUCHS A ET AL: "EVA-Netzabbildung und Routensuche für ein fahrzeugautonomes Ortungs- und Navigationssystem" NTZ NACHRICHTENTECHNISCHE ZEITSCHRIFT, VDE VERLAG GMBH. BERLIN, DE, Bd. 36, Nr. 4, April 1983 (1983-04), Seiten 220-223, XP002129852 ISSN: 0027-707X**

**Beschreibung**

Die Erfindung betrifft ein Verfahren zur Navigation eines Objekts gemäß dem Oberbegriff des Patentanspruchs 1. Dabei erfolgt die Navigation des Objekts ausgehend von einem Startpunkt zu einem Zielpunkt entlang von Verkehrswegen, die in einem elektronisch gespeicherten Verkehrswegeplan enthalten sind.

Mit Hilfe von Zielführungs- bzw. Navigationssystemen werden zum Beispiel Kraftfahrer mit ihrem Kraftfahrzeugen auf einem möglichst optimalen Weg zum Zielpunkt geleitet. Man unterscheidet hierbei zwischen verschiedenen Navigationssystemen. Solche der ersten Generation sind autark. Sie besitzen lediglich digitalisierte Verkehrswege- bzw. Straßenpläne auf CD-ROM und haben keine Anbindung zu Verkehrsinformationsdiensten bzw. Service-Providern. Sie können daher ihre Routenberechnung nicht auf aktuelle Verkehrsbedingungen optimieren. Nachteilig ist ferner das relativ schnelle Veralten der Straßenpläne sowie die Notwendigkeit, für Fahrten in neue, entferntere Regionen jeweils die entsprechenden Datenträger beschaffen zu müssen.

Bei Navigationssystemen mit sogenannter "Off-Board"-Zielführung wird die Berechnung der Fahrtroute zu einem Dienste-Anbieter bzw. Service-Provider ausgelagert. So bekommt zum Beispiel ein Kraftfahrer nach Eingabe seines Ziels die Fahrtroute dynamisch übertragen. Die Auslagerung der Berechnung der Fahrtroute sowie des dazu benötigten Datenmaterials hat einige Vorteile. Der Dienste-Anbieter hat durch Zugriff auf Informationen aus den verschiedensten Quellen, die er zentral koordinieren und verknüpfen kann, die Möglichkeit, aktuelle Verkehrsberichte, Stauprognosen, Informationen über Baustellen und das Wetter, usw., sofort in die Routenberechnung eingehen zu lassen. Zudem kann der Dienste-Anbieter seinen Datenbestand (digitalisierte Straßenpläne, Informationen zu Hotels, Sehenswürdigkeiten, öffentliche Gebäude, usw.) aktueller halten und hat Zugriff auf größere Datenmengen sowie mehr Rechenleistung als (möglichst billige) Endgeräte. Auf diese Weise kann der Fahrer auf einer Route geführt werden, die dynamisch auf die jeweils aktuellen Randbedingungen optimiert wird. Zudem entfällt die Anschaffung neuer, aktualisierter CD-ROM's. Somit werden die Verkehrsabläufe optimiert und der Verkehrsfluß effizienter, sicherer und umweltschonender gestaltet.

Als nachteilig bei den beiden oben beschriebenen Verfahren hat sich doch herausgestellt, daß zur Berechnung der Route vom Startpunkt zum Zielpunkt ein relativ großes Datenmanagement erfolgen muß und somit viel Rechenkapazität und Rechenzeit benötigt werden.

Der Artikel "EVA-Netzabbildung und Routensuche für ein fahrzeugautonoines Ortungs- und Navigationssytem" von A. Fuchs u.a. (ntz Nachrichtentechnische Zeitschrift, VDE Verlag GmbH. Berlin. Band 36 (1938) Heft 4, Seiten 220 bis 223) beschreibt ein Navigationsverfahren, bei dem als Modell für die Darstellung eines Straßennetzes ein Graph gewählt wird. Dabei werden gerichtete Straßenstücke, auch Pfeile genannt, zwischen zwei Kreuzungen auf die Knoten des Graphen und die Abbiegemöglichkeiten zwischen den Straßenabschnitten auf die Kanten des Graphen abgebildet. Die Straßenstücke werden im rechnerinternen Abbild des Straßennetzes durch einen Pfeildiskriptor repräsentiert, der aus einer Vielzahl von Informationen besteht, die für die Routensuche und den Ortungsprozess erforderlich sind.

Bei der Routenberechnung werden ausgehend von einem Zielpfeil alle Routen zu dem Ziel bestimmt. Auf diese Weise lässt es sich erreichen, dass in dem Fall, wenn das Fahrzeug von der Sollroute abweicht, nach Feststellung der neuen Position unverzüglich von dort aus wieder die richtige Fahranweisung für den günstigsten Weg zum Ziel ausgegeben werden. Hier müssen also eine Vielzahl von Routen, die von einem Startpunkt zum Ziel führen berechnet werden.

Die DE 196 51 146 A1 betrifft ein Verfahren und eine Anordnung zur Information mobiler Teilnehmer, das beispielsweise als Orientierungshilfe dienen kann. Wünscht ein Teilnehmer eine Orientierungshilfe, so wird auf Anfrage in einer Zentrale eine Route berechnet und zum Endgerät des Teilnehmers übertragen. In dem Endgerät erfolgt dann eine Abarbeitung der Route, durch die der Teilnehmer zu seinem Ziel geführt wird. Die Route besteht dabei aus einer Liste von Wegepunkten, die in der Reihenfolge abgearbeitet werden, in der sie in der Liste auftreten.

Der Erfindung liegt die Aufgabe zugrunde, zur Navigation eines Objekts ein Verfahren anzugeben, mit dessen Hilfe die Führung zum Ziel schneller und unter Verwendung weniger Rechenleistung erfolgen kann.

Die Lösung der gestellten Aufgabe ist im kennzeichnenden Teil des Patentanspruchs 1 angegeben. Vorteilhafte Ausgestaltungen der Erfindungen sind den abhängigen Ansprüchen zu entnehmen.

Ein Verfahren nach der Erfindung, bei dem die im elektronisch gespeicherten Verkehrswegeplan enthaltenen Verkehrswege mit Zielführungspunkten belegt werden, zeichnet sich dadurch aus, daß den Zielführungspunkten Zielführungswerte zugeordnet werden, die sich ausgehend vom Zielpunkt mit steigendem Abstand von diesem entweder nur vergrößern oder nur verkleinern, wobei die Navigation des Objekts unter Heranziehung der sich nur verkleinernden oder der sich nur vergrößernden Zielführungswerte erfolgt.

Die Zielführungspunkte enthalten nicht nur Informationen, z. B. in Form eines Vektors, über ihre tatsächliche geographische Position (Länge, Breite), sondern auch Informationen über den in ihrem Bereich liegenden Verkehrswegeverlauf (z. B. Straßenverlauf) und die Richtungen, entlang derer navigiert bzw. gefahren werden kann. Die den Zielführungspunkten ausgehend von einem Ziel zugeordneten Zielführungswerte erleichtern die Navigation erheblich und verringern den hierzu erforderlichen Rechenaufwand, da bei der Routenberechnung für die Zielführung nach dem erfindungsgemäßen Verfahren vom Zielpunkt aus quasi eine Welle mit Zielführungswerten, die sich nur vergrößern bzw nur verkleinern, ausgebreitet wird, so daß zur Zielführung an jedem Zielführungspunkt nur derjenige benachbarte Zielführungspunkt ermittelt zu werden braucht, dem ein kleinerer bzw. ein größerer Zielführungswert zugeordnet ist.

Der Zielpunkt bekommt dabei zum Beispiel den Zielführungswert 1 zugeordnet, während alle in Routenverlaufsrichtung gesehen unmittelbar benachbarten Zielführungspunkte den Zielführungswert 2 zugeordnet bekommen. Den zuletzt genannten unmittelbar in Routenverlaufsrichtung benachbarten Zielführungspünkten wird dann der Zielführungswert 3 zugeordnet, wobei jetzt der Zielpunkt ausfällt, usw. Mit den Zielführungswerten ist somit eine Führung des Objekts von jeder Position aus im Verkehrswegeplan möglich. Dazu dient der nächstliegende Zielführungspunkt mit dem geringsten Zielführungswert als Richtungsweiser, da dieser Punkt dem Zielpunkt am nächsten liegt. Das Verfahren könnte grundsätzlich auch so ausgeführt werden, daß am Zielpunkt mit einem relativ hohen Zielführungswert begonnen wird, der dann zu niedrigeren Werten hin abnimmt. In diesem Fall würde die Navigation vom Startpunkt zum Zielpunkt in Richtung wachsender Zielführungswerte erfolgen.

Das Belegen der Zielführungspunkte mit den entweder nur steigenden oder nur fallenden Zielführungswerten läßt sich relativ einfach und schnell durchführen, so daß die Berechnung der Route in kurzer Zeit und nur mit geringer Rechenleistung möglich ist. Der zur Navigation selbst erforderliche Datensatz nach Erstellung der Route ist darüber hinaus relativ klein, so daß auch seine Verwaltung nur wenig Rechen- und Speicherkapazität erfordert.

Das erfindungsgemäße Verfahren läßt sich daher von Vorteil in Navigationssystemen auch der ersten Generation ausführen, sofern die auf den CD-ROM's abgelegten Verkehrswegepläne mit Zielführungspunkten belegt sind. Die Routenberechnung kann relativ schnell und mit wenig Rechenleistung erfolgen, so daß billigere Endgeräte zum Einsatz kommen können. Dies gilt auch im Hinblick darauf, daß der zur Navigation berechnete Datensatz relativ klein ist, so daß für ihn auch nur wenig Speicherkapazität benötigt wird.

Aufgrund dieses relativ kleinen und die berechnete Fahrtroute darstellenden Datensatzes besteht aber auch die Möglichkeit, das erfindungsgemäße Verfahren mit Vorteil dann anzuwenden, wenn die bereits eingangs beschriebene "Off-Board"-Zielführung erfolgt, bei der die Berechnung der Fahrtroute vom Service-Provider durchgeführt wird. In diesem Fall muß die berechnete Fahrtroute vom Service-Provider zum Navigationssystem des zu navigierenden Objekts übertragen werden, was nunmehr aufgrund des geringen Datenumfangs der berechneten Route relativ einfach zum Beispiel über eine Funktelefonverbindung erfolgen kann.

Der Mobilfunk bietet neben der digitalen Sprachübertragung auch verschiedene Möglichkeiten der Datenübertragung an und ist mittlerweile praktisch flächendeckend verfügbar. Man kann somit die zur Navigation relevanten Daten, in diesem Fall die vom Service-Provider berechnete Route, mit Hilfe des vorhandenen Telefons zum Beispiel über den GSM-Kurznachrichtendienst SMS (Short Message Service) zum Kunden übertragen. Da der zu übertragende Datenumfang relativ gering ist, stellt ein Abruf der berechneten Route vom Service-Provider zum Kunden keinen erheblichen Kostenfaktor mehr dar, zumal die Datenübertragung keine ständige Datenverbindung erfordert. Der Einsatz des erfindungsgemäßen Verfahrens dürfte somit auch dann attraktiv sein, wenn Teile zu seiner Ausführung beim Service-Provider erfolgen.

Das Verfahren nach der Erfindung kann grundsätzlich zur Navigation beliebiger Objekte entlang von Verkehrswegen ausgeführt werden. Wie bereits erwähnt, kann es sich bei den Objekten um Kraftfahrzeuge handeln, die in der Lage sind, ihre tatsächliche geographische Position zu erkennen, etwa mit Hilfe eines mitgeführten GPS-Empfängers.

Bei den Objekten der in Rede stehenden Art kann es sich aber auch um Mobilfunktelefone selbst handeln, wenn diese in der Lage sind, ihre tatsächliche geographische Position zu erkennen, beispielsweise dadurch, daß sie ihre Lage unter Zurhilfenahme mehrerer umliegender Basisstationen ausmessen. Auch in diesem Fall könnte von einem Service-Provider die im voraus berechnete Route zwischen Startpunkt und Zielpunkt über die Funktelefonstrecke zum Mobiltelefon übertragen und dort gespeichert werden, da der die Route beschreibende Datensatz relativ klein ist und somit leicht im Mobiltelefon zwischengespeichert werden kann. Eine Navigation des Benutzers des Mobiltelefons könnte dann über die Anzeigeinrichtung des Mobiltelefons auf zum Beispiel optischem Wege durchgeführt werden.

Beim erfindungsgemäßen Verfahren werden nach einer Ausgestaltung der Erfindung die Zielführungspunkte den Verkehrswegen fest zugeordnet, so daß die Belegung der Zielführungspunkte mit Zielführungswerten in einfacher Weise und relativ schnell erfolgen kann, wodurch sich eine geringere Rechenzeit für die Erstellung der gewünschten Route ergibt. Dabei können die Zielführungspunkte im Bereich der Einmündungen von Verkehrswegeverzweigungen positioniert werden sowie im Bereich von Abknickstellen bzw. Kurven der Verkehrswege. Entlang längerer verzweigungsfreier Abschnitte von Verkehrswegen können mehrere hintereinanderliegende Zielführungspunkte in diesen Abschnitten verteilt positioniert werden.

Erfolgt die Vergabe der Zielführungspunkte durch einen Service-Provider, so können Zielführungspunkte auch temporär vergeben werden, etwa im Bereich von zeitlich begrenzt eingerichteten Umleitungen infolge von Baustellen, Unfällen, usw.. Die Zuordnung der Zielführungswerte zu den Zielführungspunkten erfolgt vorzugweise streckenweise, was bedeutet, daß zunächst die Zielführungspunkte entlang nur einer zwischen Zielpunkt und Startpunkt liegenden Strecke mit Zielführungswerten belegt wird, dann die nächste Strecke vom zum Zielpunkt nächstliegenden Punkt zum Startpunkt, usw.. Auf diese Weise läßt sich sicherstellen, daß von jedem beliebigen Punkt des Verkehrswegeplans immer eine Strecke mit der gewünschten fallenden oder steigenden Abfolge der Zielführungswerte in Richtung zum Zielpunkt erhalten wird.

In Übereinstimmung mit einer anderen Ausgestaltung der Erfindung erfolgt die Zuordnung der Zielführungswerte zu den Zielführungspunkten unter Berücksichtigung der Art des Verkehrsweges in der Umgebung des jeweiligen Zielführungspunktes. Dadurch läßt sich berücksichtigen, daß im Falle von zum Beispiel Einbahnstraßen diese nur in einer Richtung befahren werden dürfen, usw..

Die Art des Verkehrsweges selbst wird im Bereich eines jeweiligen Zielführungspunktes durch einen mehrdimensionalen Vektor bestimmt, der nicht nur Abzweigungs- und Befahrbarkeitsmöglichkeiten in den jeweiligen Richtungen umfaßt, sondern auch Hinweise auf den zugehörigen Straßennamen, den in Richtung zum Zielpunkt relevanten Zielführungswert (die Navigationsinformation) sowie die tatsächlichen geographischen Koordinaten des Zielführungspunkts enthält. Durch einen derartigen Vektor ist eine sichere Zielführung des Objekts gewährleistet.

In Übereinstimmung mit einer Weiterbildung der vorliegenden Erfindung wird die Größe des Planausschnitts durch die Positionen von Start- und Zielpunkt festgelegt. Der Planausschnitt umfaßt dabei neben der näheren Umgebung des Startpunkts und des Zielpunkts auch einen entsprechenden und zum Beispiel schlauchartig ausgebildeten Bereich zwischen beiden Punkten, der mehr oder weniger breit ausgeführt sein kann. Die Breite dieses schlauchartigen Bereichs und die Größe der jeweils Startpunkt und Zielpunkt umgebenden Bereiche können durch den Benutzer des Navigationssystems voreingestellt bzw. ausgewählt werden. Nur für die ausgewählten Bereiche brauchen jedoch die Zielführungspunkte mit den Zielführungswerten belegt zu werden und nicht für die gesamte Verkehrskarte, so daß auch von daher gesehen nur relativ wenig Zeit und Rechenleistung für die Erstellung der Navigationsroute benötigt werden.

Nach einer anderen Weiterbildung der Erfindung wird bei Verlassen des Planausschnittes durch das Objekt zum Beispiel automatisch ein neuer Planausschnitt aufgerufen, in welchem die Zuordnung der Zielführungswerte zu den Zielführungspunkten im Hinblick auf den alten Zielpunkt und einen neuen bzw. momentanen Startpunkt erfolgt, so daß auch jetzt wieder eine Navigation des Objekts in Richtung zum Zielpunkt möglich ist.

Alternativ dazu kann bei Verlassen des Planauschnitts durch das Objekt auch eine Kompaßnavigation zurück zum alten Planausschnitt erfolgen. Bei Eintritt in diesen kann dann erneut anhand der Zielführungswerte navigiert werden.

Ausführungsbeispiele der Erfindung werden nachfolgend unter Bezugnahme auf die Zeichnung im einzelnen erläutert. Es zeigen:

**Abbildung 1** ein Blockdiagramm einer konfigurierbaren Benutzerschnittstelle UI;
**Abbildung 2** zwei Betriebsarten zur Karten- und Routenberechnung;
**Abbildung 3** die Punktevergabe bei einer Kreuzung;
**Abbildung 4** die Punktevergabe bei einer Abzweigung und am Kartenrand;
**Abbildung 5** die Punktevergabe bei einer Einbahnstraße;
**Abbildung 6** die Punktevergabe bei einem Kreisverkehr;
**Abbildung 7** die Punktevergabe bei Autobahnen;
**Abbildung 8** die Punktevergabe bei Autobahnkreuzen;
**Abbildung 9** ein Beispiel einer idealisierten Straßenkarte;
**Abbildung 10** das prinzipielle Ablaufdiagramm des Programms "Route";
**Abbildung 11** eine Routenberechnung mit dem Lee-Algorithmus;
**Abbildung 12** eine Routenberechnung bei einer Einbahnstraße;
**Abbildung 13** eine Routenberechnung bei einer Autobahnauffahrt;
**Abbildung 14** ein Programmablaufplan einer Navigation;
**Abbildung 15** die Ausgabe eines Navigationshinweises;
**Abbildung 16** die Ermittlung einer Startposition und -richtung;
**Abbildung 17** einen Programmablaufplan bei der Ermittlung der Startposition;
**Abbildung 18** das Zufahren auf einen erwarteten Punkt;
**Abbildung 19** die Entfernungen der Instruktionen;
**Abbildung 20** das Zufahren auf den erwarteten Punkt;
**Abbildung 21** ein Beispiel zur Erkennung einer gefahreren Richtung;
**Abbildung 22** ein weiteres Beispiel zur Erkennung einer gefahrenen Richtung;
**Abbildung 23** einen Programmablaufplan zur Erkennung der gefahrenen Richtung;
**Abbildung 24** einen Programmablaufplan zur Navigation mit möglichen Fehlern;
**Abbildung 25** das Prinzip der Berechnung einer alternativen Route;
**Abbildung 26** einen Programmablaufplan zur Reaktion auf ein falsches Abbiegen;
**Abbildung 27** einen Programmablaufplan zur Reaktion auf das Finden eines falschen Punktes;
**Abbildung 28** einen Programmablaufplan für eine Kompaßnavigation;
**Abbildung 29** die Ermittlung eines Winkels für die Kompaßdarstellung; und
**Abbildung 30** eine Skizze zur Doppeldeutigkeit des errechneten Winkels für den Kompaß.

Die Umgebung des Autofahrers hat sich in den letzten Jahren verändert. In vielen Neuwagen befinden sich neben dem Autoradio heutzutage eigenständige Navigationssysteme. Der Fahrzeugbesitzer bringt oft noch ein mobiles Telefon mit. Das Bedienen dieser neu hinzugefügten Systeme während des Fahrens stellt inzwischen jedoch einen Risikofaktor für Verkehrsteilnehmer dar. Zur Erhöhung der Fahrsicherheit kann daher zum Beispiel das mobile Telefon fest mit einer Freisprechanlage installiert und mit dem Radio gekoppelt werden. So beansprucht es die Konzentration des Fahrers kaum stärker als ein Gespräch mit Fahrzeuginsassen, da das mobile Telefon weder gesucht noch in die Hand genommen werden muß. Spracherkennungssysteme, die alle Bedienerfunktionen, wie das Wählen der Nummern, das Annehmen eines ankommenden Telefonates etc. erlauben, sind bereits erhältlich.

Eine logische Weiterführung der Entwicklung ist eine Kommunikations- und Verkehrsplattform für intelligente Verkehrssysteme, die alle elektronischen Bestandteile miteinander verbindet und sich leicht für die gegebenen Peripherien konfigurieren läßt.

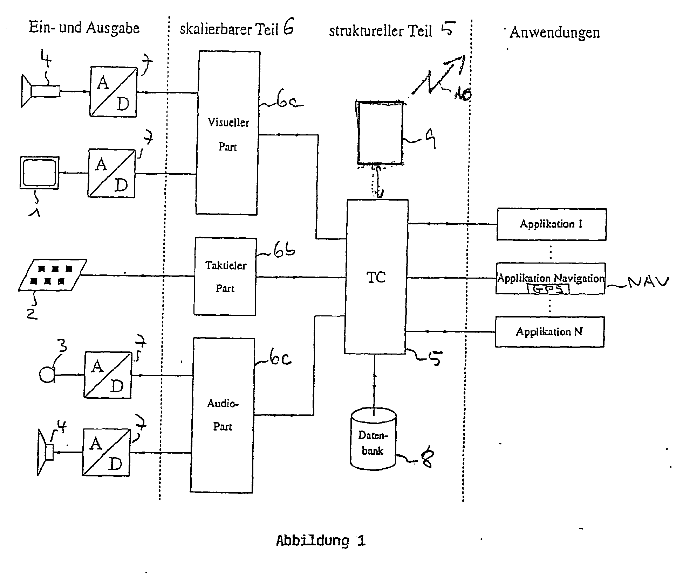

In diesem Bereich wurde u. a. eine dynamische Benutzerschnittstelle UI entwickelt, die die Bedienung von mobilen Telematik-Anwendungen in einem Auto vereinfacht und in Abbildung 1 gezeigt ist. Das System wird dem Autofahrer künftig neben dem Telefonieren die Nutzung weiterer Dienste ermöglichen. So werden beispielsweise ein manueller und automatischer Notruf sowie Pannenhilfe, Verkehrsinformationen und Auskunftssysteme, Fahrzeug-Ortung und Diebstahlschutz oder dynamische Zielführung möglich sein. Der Schwerpunkt der Benutzerschnittstelle UI liegt in der modularen Handhabung der Ein- und Ausgabegeräte und in der einfachen Konfiguration der Hardware-Umgebung, um der Automobilindustrie den Einsatz einer flexiblen Produktpalette zu ermöglichen. Es wurden ferner Konzepte entwickelt, die akustische und visuelle Ein- und Ausgaben effizient kombinieren und eventuelle Widersprüche der beiden Bedienungen vermeiden.

Die konfigurierbare bzw. dynamische BenutzerschnittstelleUI ist Teil eines Navigationssystems, das im vorliegenden Fall ausschließlich mit GPS (Global Positioning System) bzw. DGPS (Differential GPS) arbeiten soll. Wie bei schon vorhandenen Navigationssystemen ist GPS nur ein Bestandteil der Ortung. Radimpulsgeber und ein elektronischer Kompaß können die Positionsbestimmung ergänzen.

Das entwickelte Navigationssystem führt den Fahrzeugführer mit Hilfe des vorher aufgenommenen Kartenmaterials durch geeignete audio-visuelle Hinweise zu einem beliebigen Ziel. Die Navigationshinweise werden mittels TCP/IP (**T**ransmission **C**ontrol **P**rotocol/**I**nternet-**P**rotocol: Protokollkombination zum Datentransport zwischen DV-Umgebungen) einem anderen parallel laufenden Prozeß, der die audio-visuellen Ausgabeeinheiten verwaltet, mitgeteilt. Das Programm ist in der Lage, bei der Auswahl des aktuellen Fahrhinweises die Reaktion des Fahrers auf die zuletzt erzeugte Fahrinstruktion zu berücksichtigen, so daß trotz eines eventuellen Fehlverhaltens des Fahrers eine kontinuierliche Führung zum Ziel gewährleistet wird.

Ferner wurde das Navigationssystem so konzipiert, daß der Fahrzeugführer mit minimalem Datenaufwand zum Ziel geleitet werden kann. Dadurch ist es möglich, die Routenberechnung, d.h. die Erstellung der digitalen Karte und die entsprechenden Navigationsinformationen, dezentral bei einem Mobilfunk-Dienste-Anbieter durchzuführen. Somit entfällt im Fahrzeug die lokale Rechenleistung zur Bestimmung der Route und das Speichermedium wie CD-ROM für die Straßenkarte. Die Hardwareanforderung verringert sich zum Navigieren auf einen GPS-Empfänger und ein Mobilfunk-Endgerät. Die Benutzerschnittstelle UI übernimmt die Ankopplung der Hardwarekomponenten und die Schnittstelle zum Benutzer.

Die zentral gespeicherte Gesamtkarte kann gewartet und aktualisiert werden. Zudem kann der Dienste-Anbieter auf Informationen (Staus und Stauprognosen, Informationen über Baustellen und Sperrungen etc.), die die Route betreffen, zurückgreifen und diese bei der Routenberechnung berücksichtigen. Der entsprechende Ausschnitt der Karte wird nach Berechnung, z. B. über den GSM (**G**lobal **S**ystem for **M**obile **C**ommunications) - Kurznachrichtendienst SMS (**S**hort **M**essage **S**ervice), vom Mobilfunk-Anbieter zum Telefon des Kunden geschickt. Die Datenmenge dieses Ausschnittes sollte möglichst gering sein, um die Übertragungszeit und damit die Kosten des Kunden zu minimieren. Der Informationsgehalt der Karte muß jedoch für eine problemlose Navigation, die auch ein eventuelles Fehlverhalten des Fahrers einschließt, ausreichen.

Damit auch Personen ohne Hintergrundwissen das Kartenmaterial aufwandsarm erstellen können, wurde eine einfache Methode zur Eingabe und Speicherung der zur Navigation benötigten Daten entwickelt.

Nachfolgend soll die konfigurierbare Benutzerschnittstelle gemäß Abb. 1 näher beschrieben werden. Diese konfigurierbare Benutzerschnittstelle UI (**U**ser **I**nterface) ermöglicht eine modulare Handhabung der Ein- und Ausgabegeräte und eine einfache Konfiguration der Hardware-Umgebung. Sie erkennt die verschiedenen angeschlossenen Geräte wie grafische Anzeigen 1, Bedienelemente wie Tasten 2, Audioein- und Ausgabegeräte 3, 4 usw. und kann mit diesen kommunizieren.

Angebundene Applikationen 1, ... N - wie das entwickelte Navigationssystem NAV mit einem GPS Empfänger zur Lieferung von geografischen Positionsinformationsdaten oder mit Programmen zur Bereitstellung von Verkehrsinformationen - bieten der Benutzerschnittstelle UI ihre Funktionalität an, kommunizieren aber nicht mit dem Anwender. Sie empfangen also keine direkten Eingaben und geben keine Ergebnisse direkt an den Anwender weiter. Die Kommunikation mit dem Benutzer geschieht über die Benutzerschnittstelle UI und deren Ein- und Ausgabegeräte. Die Bedienung ist menügesteuert und intuitiv, die Dialoge sind leicht verständlich und widerspruchsfrei. Die Eingaben sind in jeder Situation über Sprache oder Tasten möglich.

Die Ausgabe kann sprachlich oder grafisch sein. Die Sprachausgabe ist dabei eine gute Ergänzung zur visuellen Ausgabe. Die Anweisungen bzw. Fragen können ohne Blickkontakt vom Anwender verstanden werden. Hat der Anwender die sprachliche Ausgabe nicht verstanden oder sie vergessen, kann er diese mit Hilfe der grafischen Schnittstelle nachvollziehen. Daher müssen beide Ausgabeformen effizient kombiniert und Widersprüche vermieden werden.

Ferner beinhaltet die Benutzerschnittstelle UI eine Sprechererkennung, um dem erkannten Anwender persönliche Dienste und Einstellungen zur Verfügung zu stellen. Daneben bietet sie eine Einrichtung zur sprachlichen Ausgabe von in- und ausländischen Texten an. Somit können Mitteilungen für den Anwender bequem erfolgen.

In dem Blockdiagramm der Benutzerschnittstelle in Abbildung 1 ist zu sehen, daß das user interface UI hauptsächlich aus zwei Bestandteilen besteht, und zwar dem strukturellen Teil 5 und dem skalierbaren Teil 6. Letztere 6a, 6b, 6c kommunizieren mit den Ein- und Ausgabegeräten 1-4 über A/D-Wandler 7. Sie passen u.a. die Ausgaben den Gegebenheiten an.

Der strukturelle Teil 5 leitet die Anfragen der Applikationen 1, .., NAV, ..., N an den entsprechenden skalierbaren Teil 6 weiter. Ferner ist an ihm eine Datenbank 8 angebunden, in der alle geräte- und benutzerspezifischen Daten gespeichert sind. Dieser strukturelle Teil besteht im wesentlichen aus einem Task-Controller (TC) 5. Der Task-Controller 5 ist darüber hinaus mit einem Mobiltelefon 9 verbunden, über das eine Funkverbindung 10 zu einem Service-Provider hergestellt wird. Über diese Funkverbindung werden die zur Navigation relevanten Daten mit Hilfe des vorhandenen Telefons 9 über den GSM-Kurznachrichtendienst SMS zum Kunden übertragen. Dabei wird das einmalige Übertragen der benötigten Daten bevorzugt. In diesen Daten ist zum einen der zur Navigation benötigte Kartenausschnitt mit relevanten Nebenstraßen, die eine kontinuierliche Führung zum Zielpunkt trotz eines Fehlverhaltens des Fahrers erlauben, enthalten. Zum anderen werden zu dieser Karte Informationen mitgeliefert, mit denen das Navigationsprogramm mit dem Namen "*route*" die entsprechenden Instruktionen für den Fahrer erstellen und ihn somit zum Ziel führen kann.

Wird dieser im Auto vorliegende Kartenausschnitt verlassen, kann der Anwender zwischen zwei Alternativen der Navigation wählen. Zum einen besteht die Möglichkeit, eine neue Karte, die dem aktuellen Gebiet entspricht, anzufordern. Zum anderen kann die Rückführung in das bekannte Gebiet über eine Kompaß-Navigation, die mit Hilfe der GPS-Position in die zu steuernde Richtung weist, geschehen. Im zuletzt genannten Fall braucht der Kunde keine neue Karte anzufordern, und es entstehen keine weiteren Kosten für ihn.

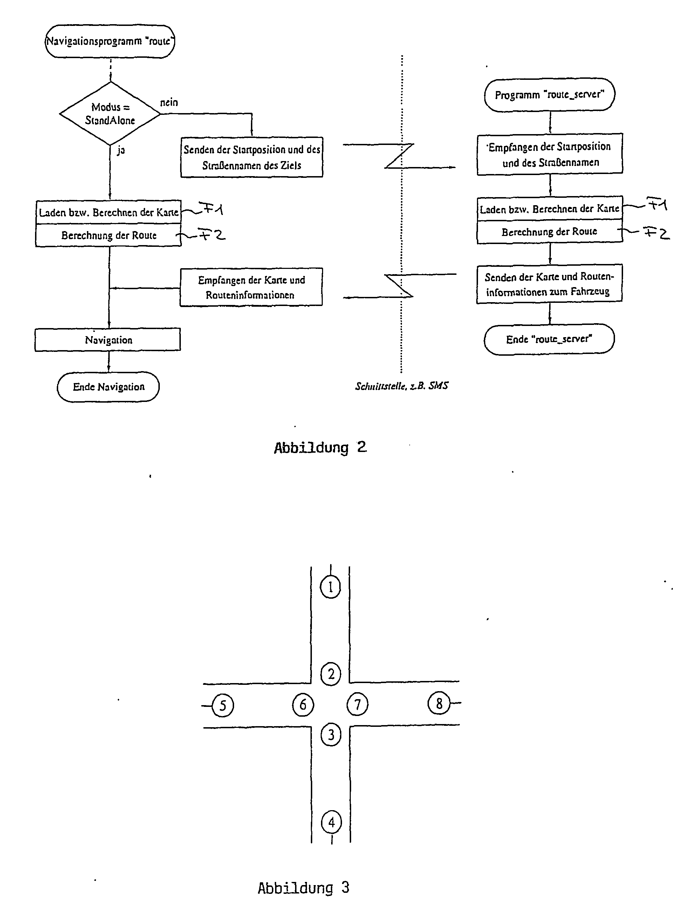

Im Rahmen der vorliegenden Erfindung existieren zwei Betriebsarten des Navigationsprogramms "*route*", die dem Benutzer die Wahl zwischen einem selbständigen Arbeiten des Programms - einem sogenannten *standalone*-Betrieb - oder der Kommunikation mit dem Programm "*route_server*" über zwei Dateien läßt. Eine Übersicht bietet Abbildung 2.

Unter dem Modus des selbstständigen Arbeitens ist das Einbinden von Funktionen F1, F2 zum Laden der Karte und zur Berechnung der Route in das Navigationsprogramm zu verstehen. Ein Datenaustausch mit dem Service-Provider ist somit nicht nötig, da das Programm "*route*" direkt auf das Kartenmaterial und die Funktion der Routenberechnung zugreifen kann.

Mit der Betriebsart der bidirektionalen Kommunikation beider Programme über Dateien erfolgt der Datenaustausch z. B. über SMS. Die SMS-Kommunikation ist daher gleichzusetzten mit dem Betrieb der bidirektionalen Datenübertragung mit Hilfe zweier Dateien von Programm "*route*" zum Programm "*route_server*".

Zur Berechnung der Route und späteren Navigation muß der zu befahrende Straßenraum mit seinen Abzweigungen und Kreuzungen und den Verkehrsregeln bekannt sein. Die jeweiligen Richtungsangaben sind in numerische Abhängigkeiten zu bringen. Ferner müssen die geographischen Positionsinformationen gespeichert sein.

Um dieses Ziel zu erreichen, wird der reelle Straßenraum, zumindest die Straßen, die befahren werden könnten, auf eine virtuelle, idealisierte Karte projiziert. Die positionsrelevanten Punkte sind Abzweigungen und Kreuzungen, an denen dem Fahrer verschiedene Fahrtrichtungen zur Verfügung stehen. Die dazwischen entstehenden Linien entsprechen den Straßen. An den Schnittpunkten wird jede Linie mit einer Nummer versehen; bei langen Straßen können Zwischenpunkte eingeführt werden. Ferner werden den vorhandenen Straßennamen Nummern zugeordnet.

Im folgenden werden einige Bespiele aufgeführt, um die Vergabe der Punkte auch an Sonderfällen bildlich zu verdeutlichen. Die Nummern der Punkte sind in den Beispielen beliebig vergeben. Sie dürfen bei einer in sich geschlossenen Karte nicht doppelt existieren.

Der Normalfall im Straßenverkehr sind einzelne Einmündungen oder Kreuzungen. Abbildung 3 zeigt eine Beispielkreuzung. Die abzweigenden Straßen werden mit beliebigen Nummern versehen.

Um kenntlich zu machen, welche Punkte miteinander verbunden sind, wird zu jeder Nummer ein Vektor mit den benachbarten Punkten angelegt. Dieser Vektor charakterisiert also die Art des Verkehrsweges im Bereich eines später noch zu beschreibenden Zielführungspunktes. Damit die Richtungsinformation ohne weiteren Datenaufwand gesichert werden kann, werden die Nummern im mathematisch positiven Sinn, angefangen mit dem rechten Punkt, aufgelistet. Der letzte Eintrag in diesem Punktvektor ist immer der "im Rücken" liegende Punkt. Dieser stammt von einer benachbarten Kreuzung und ist hier mit einem Pfeil angedeutet. Tabelle 1 zeigt die Punktevektoren der Beispielkreuzung aus Abbildung 3. In der entstandenen Punktematrix sind alle Richtungsinformationen der Kreuzung gespeichert.

**Tabelle 1: Die Punktematrix einer Kreuzung**

| Punkt | Rechts | Geradeaus | Links | Hinten |
|-------|--------|-----------|-------|--------|
| 2 | 6 | 3 | 7 | 1 |
| 3 | 7 | 2 | 6 | 4 |
| 6 | 3 | 7 | 2 | 5 |
| 7 | 2 | 6 | 3 | 8 |

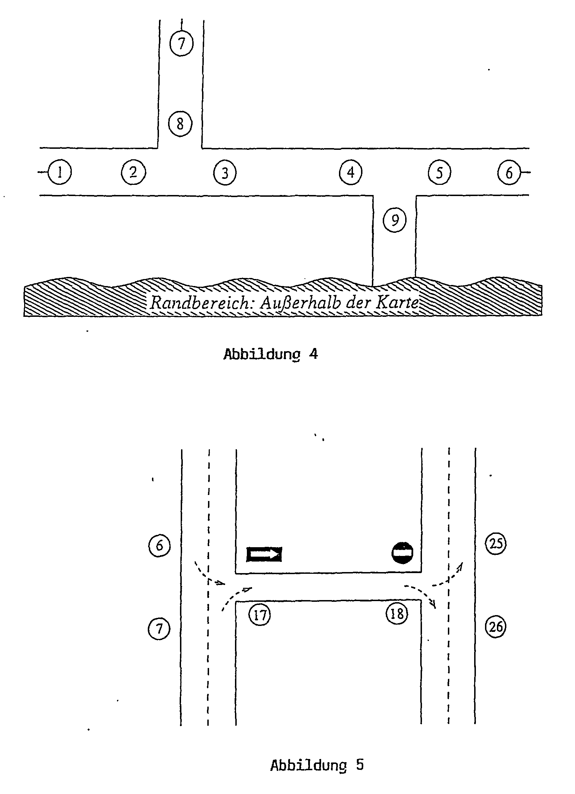

Die Vergabe der Punkte bei Einmündungen bzw. einzelnen Abzweigungen ist vergleichbar mit den von Kreuzungen. An Abbildung 4 wird die Punktevergabe für Einmündungen und für Randpunkte verdeutlicht.

Bei einer Einmündung entfällt im Vergleich zur Kreuzung eine Straße. Die fehlende Verbindung wird durch Einfügen einer 0 deutlich gemacht. Führt eine Straße zum Kartenrand (Punkt 9), macht das eine 0 "im Rücken" deutlich. In Tabelle 2 ist dies nachzulesen.

**Tabelle 2: Die Punktematrix zu Abbildung 4**

| Punkt | Rechts | Geradeaus | Links | Hinten |
|-------|--------|-----------|-------|--------|
| 2 | 0 | 3 | 8 | 1 |
| 3 | 8 | 2 | 0 | 4 |
| 4 | 9 | 5 | 0 | 3 |
| 5 | 0 | 4 | 9 | 6 |
| 9 | 5 | 0 | 4 | 0 |

Eine Einbahnstraße darf nur in einer Richtung befahren werden. Da die Existenz dieser Straße dem Programm für die spätere Routenberechnung bekannt sein muß, ist diese Information in irgendeiner Form in der Karte zu speichern. Die Lösung wird mit Hilfe der Abbildung 5 verdeutlicht.

Durch die Einführung von negativen Zahlen in der Matrix wird das Verbot eines Abbiegens definiert. So wird die Variable für das Linksabbiegen des Punktes 26 negativ: -18. Dadurch wird festgelegt, daß zwar eine Straße links vorhanden ist, jedoch keine Instruktion dafür gegeben werden darf. In Tabelle 3 kann nachvollzogen werden, wie sich das System auf die restlichen Punkte anwenden läßt. Da die Punkte außerhalb der Kreuzungen hier nicht relevant sind, werden sie in der Tabelle mit einem *x* offen gehalten.

**Tabelle 3: Die Punktematrix einer Einbahnstraße**

| Punkt | Rechts | Geradeaus | Links | Hinten |
|-------|--------|-----------|-------|--------|
| 6 | 0 | 7 | 17 | *x* |
| 7 | 17 | 6 | 0 | *x* |
| 17 | -6 | 0 | -7 | 18 |
| 18 | 26 | 0 | 25 | -17 |
| 25 | -18 | 26 | 0 | *x* |
| 26 | 0 | 25 | -18 | *x* |

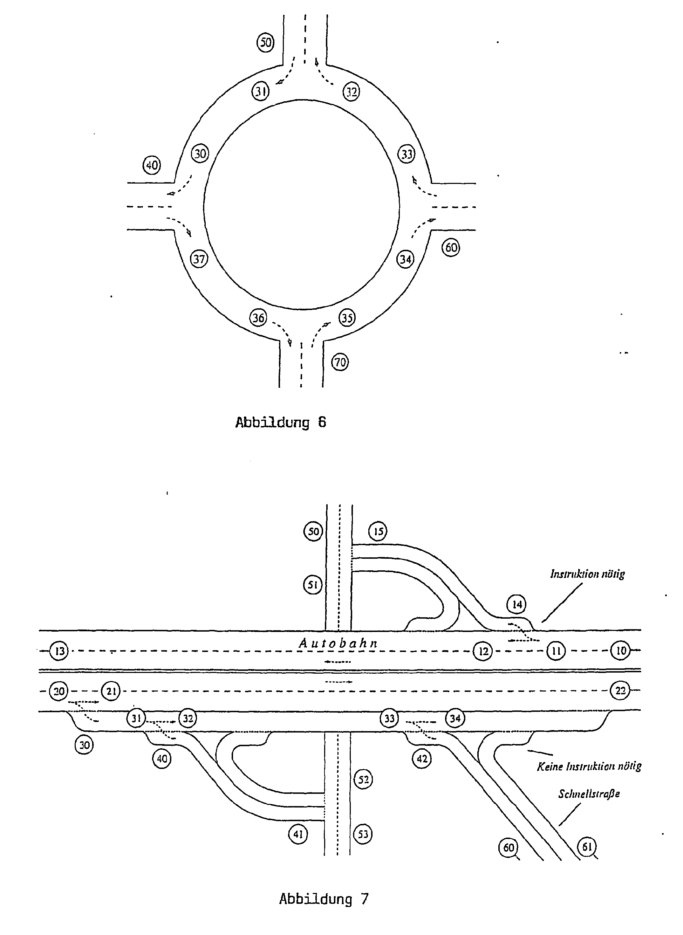

Der Kreisverkehr kann In dem verwendeten System als eine lange, in sich geschlossene Einbahnstraße betrachtet werden. Jede Ein- bzw. Ausfahrt wird als Kreuzung aufgenommen. Mit Hilfe des Kreisverkehrs in Abbildung 6 und deren Matrix in Tabelle 4 soll dies verdeutlicht werden.

**Tabelle 4: Die Punktematrix eines Kreisverkehrs**

| Punkt | Rechts | Geradeaus | Links | Hinten |
|---|---|---|---|---|
| 30 | 40 | 37 | 0 | -31 |
| 31 | 0 | -32 | -50 | 30 |
| 32 | 50 | 31 | 0 | -33 |
| ⋮ | ⋮ | ⋮ | ⋮ | ⋮ |
| 37 | 0 | -30 | -40 | 36 |
| 40 | 37 | 0 | -30 | x |
| 50 | 31 | 0 | -32 | x |
| ⋮ | ⋮ | ⋮ | ⋮ | ⋮ |

Bei Schnellstraßen und Autobahnen sind die Fahrbahnen baulich voneinander getrennt. Somit ist ein Linksabbiegen und Umdrehen unmöglich. Daher können beide Fahrtrichtungen als eigenständige gegenläufige Einbahnstraßen angesehen werden und dementsprechend programmiert werden. Ferner brauchen bei Autobahnen nur die Abfahrten mit Punkten gekennzeichnet zu werden. Bei Auffahrten hat der Fahrer nur die Möglichkeit geradeaus zu fahren. Eine Instruktion würde hier keinen Sinn machen und den Fahrer unnötig stören. In Abbildung 7 ist zu sehen, an welchen Positionen Aktionen vom Fahrer ausgehen können und somit Punkte vergeben werden müssen.

Bei der Navigation muß der Hinweis zum Rechtsabbiegen früher als bei einer normalen Straße, nämlich spätestens am Anfang des Verzögerungsstreifens, gegeben werden. Instruktionen für das u. U. lange Geradeausfahren sollten bei Autobahnen unterlassen werden. Aus diesen - und weiteren später erläuterten - Gründen, muß die Existenz einer Autobahn aus der Karte ersichtlich sein. Um dies zu erreichen, wird sich der freien Variablen für das Linksabbiegen bedient, die - für deutsche Karten - immer mit 0 programmiert würde. Diese wird dem invertierten rechten Punkt gleichgesetzt. Dies ist bei normalen Straßen unmöglich, da jeder Punkt nur einmal existieren darf. Somit ist eine Kennzeichnung der Autobahn ohne eine zusätzliche Variable möglich. Der Tabelle 5 können die Programmierungen für Abbildung 7 entnommen werden. Analog zu den Einbahnstraßen sind auch hier die Richtungen, in denen ein Fahren nicht erlaubt ist, negativ zu setzen. Die für dieses Beispiel unbekannten, außerhalb der Darstellung liegenden Punkte werden wieder durch ein x ersetzt.

**Tabelle 5: Die Punktematrix bei Autobahnen**

| Punkt | Rechts | Geradeaus | Links | Hinten |
|---|---|---|---|---|
| 10 | x | x | x | 11 |
| 11 | 14 | 12 | -14 | -10 |
| 12 | -14 | -11 | -14 | 13 |
| 13 | x | x | x | -12 |
| 14 | -12 | 0 | -11 | 15 |
| 15 | 50 | 0 | 51 | 13 |
| 20 | 30 | 21 | -30 | -x |
| 21 | -30 | -20 | -30 | 22 |
| 22 | x | x | x | -21 |
| 30 | -21 | 0 | -20 | 31 |
| 31 | 40 | 32 | -40 | -30 |
| 32 | -40 | -31 | -40 | 33 |
| 33 | 42 | 34 | -42 | -32 |
| 34 | -42 | -33 | -42 | 22 |

(fortgesetzt)

| Punkt | Rechts | Geradeaus | Links | Hinten |
|---|---|---|---|---|
| 40 | -32 | 0 | -31 | 41 |
| 41 | 53 | 0 | 52 | 33 |
| 42 | -34 | 0 | -33 | 60 |
| 50 | 0 | 51 | 15 | *x* |
| 51 | 15 | 50 | 0 | 52 |
| 52 | 41 | 53 | 0 | 51 |
| 53 | 0 | 52 | 41 | *x* |
| 60 | *x* | *x* | *x* | -42 |
| 61 | *x* | *x* | *x* | 22 |

Eine weitere Besonderheit ist, wie schon angedeutet, die Auffahrt. Hier kann vom Fahrer kein Fehlverhalten erwartet werden. Hinzu kommt eine Instruktion zum rechts abbiegen, wenn im herkömmlichen Sinne die Ausfahrt "in den Rücken" programmiert würde, die keinen Sinn macht. Die Koordinaten der "Kreuzung" Autobahnauffahrt könnten unmöglich gefunden werden, da sie am Beginn des Verzögerungsstreifen aufgenommen würden. Daher kann nicht z. B. bei Punkt 41 der Punkt 40 programmiert werden. Bei Punkt 41 muß jedoch bei der Navigation bekannt sein, welche Ausfahrt angesteuert werden soll. Um dies zu erreichen, zeigt die Variable der Auffahrt zur Autobahn positiv auf die nächstliegende erreichbare Ausfahrt. Dazu muß im "Rücken" des Punktes 41 die Nummer 33 programmiert werden. Punkt 33 hingegen kann nur auf einen Punkt zurückzeigen, obwohl eine Programmierung von zwei Punkten (32 und 41) möglich ist. Es wird vereinbart, daß er negativ auf Punkt 32 zurückzeigt, wobei die Programmierung von Punkt 41 theoretisch möglich ist.

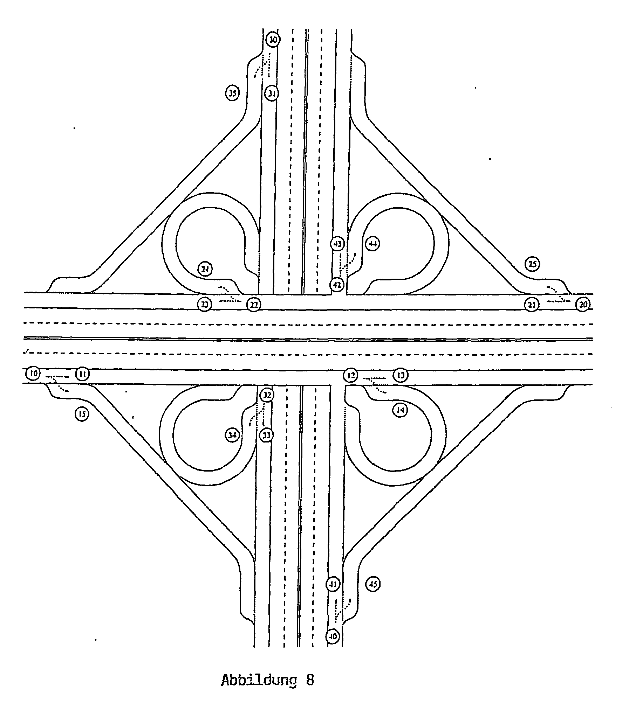

Ein Autobahnkreuz bzw. -dreieck ist lediglich eine Aufeinanderfolge von Autobahnauffahrten. Bei dem Autobahnkreuz in Abbildung 8 sind alle Stellen, an denen der Fahrer zwischen verschiedenen Aktionen zu wählen hat, mit den entsprechenden Punkten versehen. Die Tabelle 6 soll die Zuweisung der Punktevektoren dokumentieren.

**Tabelle 6: Die Punktematrix eines Autobahnkreuzes**

| Punkt | Rechts | Geradeaus | Links | Hinten |
|---|---|---|---|---|
| 10 | 15 | 11 | -15 | -*x* |
| 11 | -15 | -10 | -15 | 12 |
| 12 | 14 | 13 | -14 | -11 |
| 13 | -14 | -12 | -14 | *x* |
| 14 | -13 | 0 | -12 | 42 |
| 15 | -11 | 0 | -10 | *x* |
| 20 | 25 | 21 | -25 | -*x* |
| 21 | -25 | -20 | -25 | 22 |
| 22 | 24 | 23 | -24 | -21 |
| 23 | -24 | -22 | -24 | *x* |
| 24 | -23 | 0 | -22 | 32 |
| 25 | -21 | 0 | -20 | *x* |
| 30 | 35 | 31 | -35 | -*x* |
| 31 | -35 | -30 | -35 | 32 |
| 32 | 34 | 33 | -34 | -31 |
| 33 | -34 | -32 | -34 | *x* |
| 34 | -33 | 0 | -32 | 12 |

(fortgesetzt)

| Punkt | Rechts | Geradeaus | Links | Hinten |
|-------|--------|-----------|-------|--------|
| 35 | -31 | 0 | -30 | *x* |
| 40 | 45 | 41 | -45 | *-x* |
| 41 | -45 | -40 | -45 | 42 |
| 42 | 44 | 43 | -44 | -41 |
| 43 | -44 | -42 | -44 | *x* |
| 44 | -43 | 0 | -42 | 22 |
| 45 | -41 | 0 | -40 | *x* |

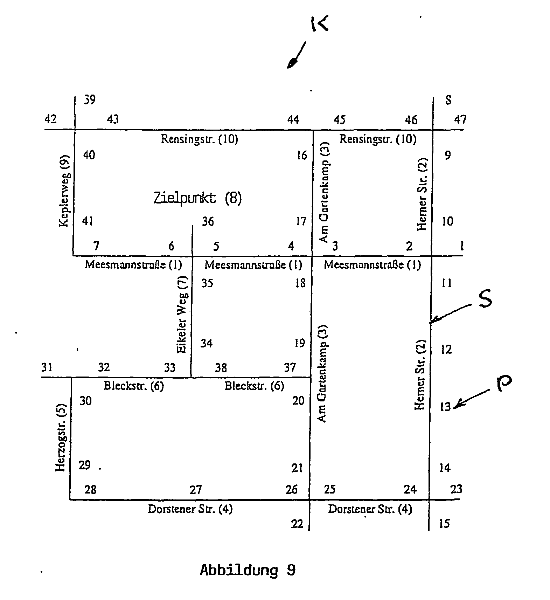

Abbildung 9 zeigt das Beispiel einer idealisierten Straßenkarte K. Die Nummern der Straßen S, auf die noch eingegangen wird, sind den Straßennamen in Klammern angehängt.

Der Vektor eines Punktes P bzw. Zielführungspunktes enthält neben den schon beschriebenen umliegenden Punkten die Nummer des dazugehörigen Straßennamens und die zweidimensionalen GPS-Koordinaten, d.h. den Längen- und den Breitengrad des Punktes. Ist zu diesem Punkt kein Straßenname eingegeben worden - da er z.B. einen Außenpunkt der Karte darstellt und somit nicht befahren werden sollte - wird hier eine -1 als Bezeichnung der Straße eingetragen.

Im Ganzen ergeben die Vektoren eine Matrix, die alle relevanten Informationen der erfaßten realen Karte enthält, und mit der eine Routenberechnung möglich ist. Eine Beispiel-Matrix, die einen Teil der Karte aus Abbildung 9 beschreibt, ist in Tabelle 7 zu sehen.

**Tabelle 7: Beispiel-Matrix einer idealisierten Karte**

| Punkt | Rechts | Geradeaus | Links | Hinten | Straße | Latitude | Longitude |
|-------|--------|-----------|-------|--------|--------|----------|-----------|
| 1 | 10 | 2 | 11 | 0 | 1 | 5131.0757 | 712.0444 |
| 2 | 11 | 1 | 10 | 3 | 1 | 5131.0757 | 712.0444 |
| 3 | 17 | 4 | 18 | 2 | 1 | 5131.0789 | 712.0123 |
| 4 | 18 | 3 | 17 | 5 | 1 | 5131.0789 | 712.0123 |
| 5 | 36 | 6 | 35 | 4 | 1 | 5131.0811 | 711.9967 |
| 6 | 35 | 5 | 36 | 7 | 1 | 5131.0811 | 711.9967- |
| 7 | 41 | 0 | 0 | 6 | 1 | 5131.0779 | 711.9772 |
| 8 | 46 | 9 | 47 | 0 | -1 | 5131.0269 | 712.0426 |
| 9 | 47 | 8 | 46 | 10 | 2 | 5131.0269 | 712.0426 |
| ⋮ | ⋮ | ⋮ | ⋮ | ⋮ | ⋮ | ⋮ | ⋮ |
| 46 | 9 | 47 | 8 | 45 | 10 | 5131.0269 | 712.0426 |
| 47 | 8 | 46 | 9 | 0 | 10 | 5131.0269 | 712.0426 |

Mit einem speziellen Programm "*prog_card*" wird die schon beschriebene Matrix mit den Punkten der Karte aufgenommen. Bei Eingabe der Punkte werden diese kontrolliert und die Zusammenhänge der Punkte werden überprüft. Mit Hilfe der Beispielkarte aus Abbildung 9 werden diese Zusammenhänge verdeutlicht.

Gegenüberliegende Punkte - wie hier z.B. Punkt 1 und Punkt 2 - haben im Normalfall die gleichen Seitenstraßen. So ist rechts von Punkt 1 der Punkt 10. Bei Punkt 2 ist Punkt 10 der Linke usw. Ferner ist die Information, daß sich Punkt 1 und Punkt 2 gegenüberliegen, in beiden Punkten enthalten.

Wird einer dieser Zusammenhänge verletzt, gibt das Programm eine Warnung aus. Dies soll den Programmierer der Karte vor Eingabefehlern schützen. Bei Autobahnen bzw. Schnellstraßen müssen diese Warnungen ignoriert werden, da hier absichtlich Punkte doppelt eingegeben werden müssen.

Ferner enthält das Programm einige Hilfen bei der Eingabe, wie die Ausgabe der schon programmierten Punkte, die Auflistung der noch zu verwendenden, freien Punkte oder die noch zu programmierenden Punkte. Die Eingabe der Punkte und diese Hilfestellungen werden später näher beschrieben.

Nachdem die Eingabe der Punkte beendet ist, werden die Straßennamen vergeben.

Nach Start des Programms "*prog_card*" wird zunächst die beschriebene Matrix der idealisierten Karte aufgenommen. Die erscheinende Oberfläche ist nachfolgend dargestellt.

```
Program your
points...
                        Instructions:
Point number:
                        r (ready: name the streets)
                        q (quit without saving !)
                        s (save the points)
                        1 (load existing card)
                        v (view the points)
                        t (to do)
                        f (free points)
                        ?... (Neighbouring points of point ...)
                        or the number of a point to program it ...
```

Zunächst wird der zu speichernde Punkt eingegeben, z.B. Punkt 1 der Beispiel-Matrix aus Tabelle 9. Nun erscheint die Aufforderung zur Eingabe des rechts liegenden Punktes. Wie in der Matrix zu sehen ist, ist dies der Punkt 10. In gleicher Weise wird der gegenüberliegende Punkt (2), der links liegende Punkt (11) und der Punkt "im Rücken", hier die Null, eingegeben. Der nun entstandene Bildschirmaufbau ist in der folgenden Abbildung zu sehen.

Nach der Eingabe der Punkte werden die Zusammenhänge zu den umliegenden Punkten (10, 2, 11) überprüft, und es werden die ggf. vorhandenen Warnungen ausgegeben. Bei einem Eingabefehler kann der fehlerhafte Punkt überschrieben werden. Daher wird hier mit einer zusätzlichen Abfrage das versehentliche Überschreiben verhindert.

```
Program your points...
                        Instructions:
Point number: 1
                        r (ready: name the streets)
Right: 10               q (quit without saving !)
Straight on: 2          s (save points)
Left: 11                1 (load existing card)
Backwards: 0            v (view the points)
                        t (to do)
                        f (free points)
                        ?... (Neighbouring points of point ...)
                        or the number of a point to program it ...
```

Wurde nach Eingabe der Punkte der erste Programmteil verlassen, können nun die zugehörigen Straßennamen der Punkte eingegeben werden. So ist es möglich, bei Fahrinstruktionen nicht nur die Richtungsangaben, wie "Bitte gleich rechts abbiegen", zu geben, sondern auch den zugehörigen Straßennamen in die Instruktion einzubinden. So entsteht die Anweisung "Bitte gleich rechts in die ... abbiegen".

Für die Eingabe sucht "*prog_card*" nach zusammenhängenden Straßen. In der Beispielkarte aus Abbildung 9 fragt das Programm zuerst nach dem Namen der Straße von Punkt 1, da dieser ein Randpunkt ist.

Gehört diese Straße beispielsweise noch zur "Meesmannstraße", kann diese hier - wie in der folgenden Abbildung zu sehen ist - angegeben werden. Die "Meesmannstraße" erhält nun vom Programm die Nummer 1. Im Datenfeld des Punktes 1 wird als Straßennummer die 1 als Verweis auf den Namen "Meesmannstraße" gespeichert.

```
You've programed 47 points, now name the streets...
Instructions:
q (quit with saving points and streets)
s (save points and streets)
```

(fortgesetzt)

```
n (show named streets)
u (undo: rename the last street)
v (view the points)
?... (Neighbouring points of point ...)
or the name of the street ...
Name street on point 1: Meesmannstraße
```

Daraufhin wird nach dem Namen der Verbindungsstraße von Punkt 2 nach Punkt 3 gefragt. Da dieser mit der vorherigen Eingabe identisch ist, kann sie zur Erleichterung mit der Taste "Return" übernommen werden. Im Datenfeld der Punkte 2 und 3 wird ebenfalls die 1 als Verweis für den Namen "Meesmannstraße" gespeichert. Für die Straßennamen von Punkt 4 zu 5 und von Punkt 6 zu 7 kann ebenso vorgegangen werden.

Die nächste Eingabeaufforderung wird der Straßenname des Punktes 8 sein. Hier soll kein Straßenname eingefügt werden, da keine Fahrinstruktion in den Randbereich zu erwarten ist und so die Datenmenge reduziert werden kann. Dieser namenlosen Straße wird eine spezielle Nummer, die -1, als Verweis zugeordnet.

Erfolgt nun für die Aufforderung des Straßennamens von Punkt 9 zu Punkt 10 die Eingabe "Herner Str.", wird dieser Straße die Nummer 2 zugeordnet. Danach wird nach dem Straßennamen von Punkt 11 nach 14 gefragt, da Punkt 12 und Punkt 13 nur Hilfspunkte für die Navigation sind und nicht eine Änderung des Straßennamens mit sich führen.

Sind alle Punkte einem Straßennamen zugeordnet, erkennt dies das Programm und erwartet zur Speicherung der eingegebenen Daten einen Dateinamen. Mit der Taste "Return" kann hier auch ein voreingestellter Dateiname - z.B. der Dateiname der schon geladenen Karte - übernommen werden.

Nachfolgend sollen einige praktische Hinweise bei der Erstellung der digitalen Karte gegeben werden.

- Zu Beginn der Punktevergabe sollte nicht direkt mit der 1 als erster Nummer begonnen werden, da meistens noch Punkte am Startpunkt - der später wahrscheinlich als erstes programmiert wird - hinzukommen.

- Für eine Straße möglichst die Punkte geschlossen eingeben, da so bei der Vergabe der Straßennamen die Eingabe mit "Return" schnell abgeschlossen werden kann und die Karte zudem übersichtlicher wird.

- Nach Beendigung der Punktezuteilung für eine Straße einige Punkte frei lassen, da häufig z.B. am Rand liegende Nebenstraßen vergessen werden, oder Straßen in der Karte nicht eingetragen sind, und so ein logisches Einführen von Zahlen problemlos machbar ist.

- Gebiete in der Karte durch hohe Nummern sichtbar trennen: Punkte können so bei der Eingabe der Straßennamen, bei der späteren Speicherung der Koordinaten oder bei der Navigation leichter wiedergefunden werden.

- Es kann ein Simulationsfile einer abzufahrenden Strecke erstellt werden. So ist es möglich, eine erste Navigation lokal am Rechner durchzuführen. Eventuelle Fehler in der Karte können so komfortabler gefunden werden.

Sollen die Kartendaten gespeichert werden, wird in einem fest definierten Verzeichnis - welches in einer Konfigurationsdatei *prog_card.rc* angegeben wird - eine Datei angelegt, in der sowohl die Kartenmatrix als auch die Straßennamen gespeichert werden. Nachfolgend ist der obere Teil der Datei dargestellt.

```
47
1 10 2 11 0 1
2 11 1 10 3 1
3 17 4 18 2 1
4 18 3 17 5 1
5 36 6 35 4 1
6 35 5 36 7 1
7 41 0 0 6 1
8 46 9 47 0 -1
9 47 8 46 10 2
10 2 11 1 9 2
11 1 10 2 12 2
```

(fortgesetzt)

```
12 0 11 0 13 2
13 0 12 0 14 2
14 24 15 23 13 2
15 23 14 24 0 2
16 45 0 44 17 3
17 4 18 3 16 3
18 3 17 4 19 3
19 37 20 0 18 3
20 0 19 37 21 3
21 26 22 25 20 3
22 25 21 26 0 -1
23 14 24 15 0 4
24 15 23 14 25 4
25 21 26 22 24 4
26 22 25 21 27 4
27 0 26 0 28 4
28 29 0 0 27 4
29 0 0 28 30 5
30 32 0 31 29 5
31 30 32 0 0 6
32 0 31 30 33 6
33 0 38 34 32 6
34 33 0 38 35 7
35 5 36 6 34 7
36 6 35 5 0 8
37 20 0 19 38 6
38 34 33 0 37 6
39 42 40 43 0 -1
40 43 39 42 41 9
41 0 0 7 40 9
42 40 43 39 0 10
43 39 42 40 44 10
44 16 45 0 43 10
45 0 44 16 46 10
46 9 47 8 45 10
47 8 46 9 0 10
```

In der ersten Zeile steht die Anzahl der gespeicherten Punkte, die folgenden Zeilen enthalten den Vektor der Punkte. Im ersten Element steht der entsprechende Punkt. Die folgenden vier Elemente enthalten die umliegenden Punkte und damit die Richtungsangaben. In der letzten Spalte steht der Verweis auf den entsprechenden Straßennamen. Ist kein Name vorhanden, steht hier eine -1. Die Straßennamen selbst sind im unteren Teil der Datei enthalten, der nachfolgend zu sehen ist.

```
10
1 7 Meesmannstraße
9 15 Herner Straße
16 21 Am Gartenkamp
23 28 Dorstener Straße
29 30 Herzogstraße
31 33 Bleckstraße
34 35 Eickeler Weg
```

(fortgesetzt)

| 36 36 NOKIA |
| 40 41 Keplerweg |
| 42 47 Rensingstraße |

In der ersten Zeile steht die Anzahl der vorhandenen Straßennamen. Die Numerierung der einzelnen Straßennamen entspricht der Zeilennummer. Die Daten in der ersten und zweiten Zeile dienen als Anhaltspunkt, in welchem Bereich die Straße örtlich vorhanden ist. Sie entsprechen dem Anfangs- und Endpunkt der Straße.

Zur Zuordnung der Punkte zu den entsprechenden GPS-Koordinaten dient ein Programm mit dem Namen "*save_card*". Nachdem das Programm gestartet wurde, muß die Karte geladen werden. Hier kann wieder ein Dateiname eingegeben werden oder der voreingestellte Name mit "Return" übernommen werden. Nun muß der erste zu speichernde Punkt eingegeben werden. Hier kann zusätzlich mit '1' eine schon aufgenommene GPS-Datei geladen werden. Danach werden alle noch zu speichernden Punkte aufgelistet. Hier kann der Programmierer auswählen, welchen er zuerst anfahren möchte. Nachstehende Abbildung zeigt den Bildschirmaufbau, nachdem beide Dateien geladen wurden. Es wurden die Voreinstellungen der Dateinamen mit "Return" übernommen und Punkt 5 soll zunächst aufgenommen werden.

```
File to load card (return = default) :
Read 47 points and 10 street names from file
Please type in the first point you wonna save (1=load): 1
File to load GPS-positions (return = default) :
Read 12 GPS-positions from file
Please type in the first point you wonna save (1=load): 5
```

Nachfolgende Abbildung zeigt den Bildschirmaufbau des Programms für die Speicherung des Punktes 5. Da für alle Punkte einer Kreuzung die identische GPS-Position aufgenommen wird, sind nach Speicherung des Punktes 5 auch die GPS-Koordinaten der Punkte 6, 35, 36 aufgenommen.

Im oberen Teil des Bildschirmaufbaus der nachfolgenden Abbildung sind allgemeine Informationen des GPS-Empfängers dargestellt. So zeigt der Kommentar "Fix quality: DGPS, satellites being tracked: 6", daß eine DGPS-Messung mit sechs Satelliten vorliegt. Darunter wird die aktuell gemessene Position ausgegeben. Ferner wird die ermittelte Geschwindigkeit und die Ausrichtung gegenüber Norden dargestellt. Die Parameter PDOP, HDOP und VDOP, welche vom GPS-Empfänger geliefert werden, geben einen Aufschluß über die Genauigkeit der aktuellen Positionsmessung. Bei den darunter angegebenen Toleranzen sind die Extremwerte ausgegeben. Je kleiner der jeweilige Wert ist, desto genauer ist die aktuelle Messung.

```
Press space bar to save GPS-position for point 5 (ESC or q quits) space:
                                               save point
Fix quality: DGPS, satellites being tracked: 6  ->: RIGHT
Time in seconds since last DGPS update: 2       <-: LEFT
                                                up: STRAIGHT
                        PDOP: 2.52              down: BACK
                        1.5 - 8.0
Position: 5131.2090 latitude                    n: next point
712.1249 longitude      HDOP: 1.51              s: save
                        1.0 - 5.0               u: undo
Speed: 37.3 km/h                                t: to do
                        VDOP: 2.01              r: results
Angle: 56.6             1.0 - 5.0               d: del street
                                                o: one-way street
                                                q: quit without saving

                 straight: 'Meesmannstraße' (6)
left: 'Eickeler Weg' (35)      right: ZIEL (36)
to 'Meesmannstraße' (5)
Drive via 'Meesmannstraße' (4) ...
Ready to get new point (speed is high enough)
```

Im unteren Teil des Bildschirmaufbaus ist ein schematischer Aufbau der Kreuzung dargestellt. So kann sich der Programmierer während der Aufnahme vergewissern, daß er bei Speicherung der Koordinaten die richtigen Punkte zuordnet. Die Kreuzung muß in diesem Fall über Punkt 4, die Meesmannstraße, angesteuert werden. Dies ist zur Erkennung der nächsten zu speichernden Punkte relevant. Nachdem die GPS-Position übernommen wurde, erkennt das Programm die gefahrene Richtung und kann automatisch aus den Informationen der Karte die nächsten Punkte, die angesteuert werden, zur Speicherung der Koordinaten vorschlagen. Damit wird erreicht, daß der Programmierer nicht jeden zu speichernden Punkt vorher eingeben muß.

Zur fehlerfreien Richtungserkennung muß eine Mindestgeschwindigkeit garantiert sein. Dies wird in der untersten Zeile angezeigt.

Die automatische Richtungserkennung kann mit den Pfeil-Tasten umgangen werden. Wird die GPS-Position beispielsweise mit der linken Pfeil-Taste übernommen, geht das Programm davon aus, daß das Fahrzeug links abgebogen ist und nun die Punkte auf der Kreuzung von Punkt 34 aufgenommen werden sollen.

Ist der vorgeschlagene Punkt schon aufgenommen, weist eine Warnung darauf hin. Nun kann der nächste Punkt, der aufgenommen werden soll, eingegeben werden, usw.

Da in der Regel die Programmierung der Karte anhand eines Stadtplanes geschieht, kann sich das aufgenommene Kartenmaterial von der Realität unterscheiden. Häufig stellt sich eine aufgenommene Straße als nicht befahrbar heraus, da es sich z.B. um einen Feldweg handelt. In diesem Falle muß die Straße aus der Karte entfernt werden. Ist eine Durchfahrt verboten, dieses aber noch nicht im Kartenmaterial vorgesehen, kann dies mit weiteren Eingaben der relevanten Punkte kenntlich gemacht werden.

Wie zuvor beschrieben, wird ein Kartenausschnitt mit Navigationsinformationen z.B. über SMS zum Fahrzeug gesendet. Wäre beispielsweise eine Gesamtkarte eines Landes vorhanden, so wäre dies zu umfangreich, um sie über SMS zu schicken. Zuvor sollte ein Ausschnitt gebildet werden, mit dem der Fahrer von seinem aktuellen Standort zum Zielpunkt geführt werden kann.

Vor der Bildung des Kartenausschnittes muß die Route berechnet werden, was später erläutert wird. Ist die "optimale" Strecke bekannt, muß diese aus der Karte "geschnitten" werden. Hierzu könnte ein Schlauch um die Strecke gelegt werden, der in einem vorgegebenen Radius die relevanten Nebenstraßen einbezieht, um bei einem Fehlverhalten des Fahrers diesen wieder auf die errechnete Route zurückzuführen. Dabei müssen in Stadtgebieten, insbesondere um den Startpunkt und die gesamte Zielstraße herum, mehrere - also auch kleinere - Straßen mitgesendet werden. Bei langen Autobahnstrecken ist davon auszugehen, daß sich der Fahrer nicht so schnell falsch verhält. Daher brauchen hier nur die Ab- bzw. Auffahrten übertragen zu werden.

Das Navigationssystem, welches u.a. das Programm "*route*" ausführt, soll den Fahrzeugführer durch geeignete audio-visuelle Hinweise bzw. Fahrinstruktionen zu einem beliebigen Ziel führen. Unter Instruktion ist zum einen der Hinweis auf eine Aktion, wie das Abbiegen nach links bzw. rechts oder das Geradeausfahren, zum anderen das Übermitteln von Status-Informationen, wie "*Ihre Route ist berechnet*" oder "*Sie haben das Ziel erreicht*" zu verstehen. Zur sprachlichen Ausgabe der Instruktion wird ein kompletter Satz erzeugt, der neben der zu fahrenden Richtung auch den Straßennamen und die Distanz zur Aktion enthält. Eine mögliche Instruktion könnte beispielsweise
"*Bitte in 250 Metern rechts in die Meesmannstraße abbiegen.*"
sein.

Neben der Audio-Ausgabe wird auf einem im Fahrzeug untergebrachten Bildschirm bzw. einem verwendeten Laptop ein visueller Hinweis - wie z.B. ein Pfeil - ausgegeben. Ferner wird auch der nächste Straßenname und die Entfernung zur nächsten Aktion ausgegeben.

Um Fahrfehler zu vermeiden und die Orientierung zu erleichtern, werden pro Aktion bis zu drei Instruktionen mit verschiedenen Distanzen zum TC 5 geschickt. Die Konfiguration der Distanzen wird noch beschrieben.

Vom Benutzer wird nur das Ziel eingegeben, da der Ausgangspunkt der Navigation die aktuell gemessene Position ist. Das Ziel wird zunächst eine Straße in der aufgenommenen Karte sein.

Wird das Programm "*route*" vom TC 5 gestartet - ist also eine Navigation erwünscht - sind zunächst einige Initialisierungen der Soft- und Hardware nötig. Sind die Initialisierungen erfolgreich verlaufen, müssen zur Berechnung der Route der Startpunkt und der Zielpunkt bekannt sein. Der Startpunkt wird über die aktuelle Position des Fahrzeuges ermittelt. Da der Zielpunkt vom Benutzer eingegeben wird, muß das Programm "*route*" diesen vom TC 5, der dann mit den entsprechenden Prozessen kommuniziert, anfordern. Die Start- und Zielinformationen werden dann dem Server mitgeteilt, der die Routenberechnung vornimmt, wie noch beschrieben wird.

Die Ergebnisse bzw. Fehler der Berechnungen werden dem Programm "*route*" zurückgeschickt. Die Kommunikation über SMS wird noch beschrieben.

Nun beginnt die eigentliche Navigation, bei der die Fahrinstruktionen ermittelt und dem TC 5 zur Ausgabe mitgeteilt werden. Ferner wird ein eventuell auftretender Fehler unverzüglich an den TC 5 weitergeleitet.

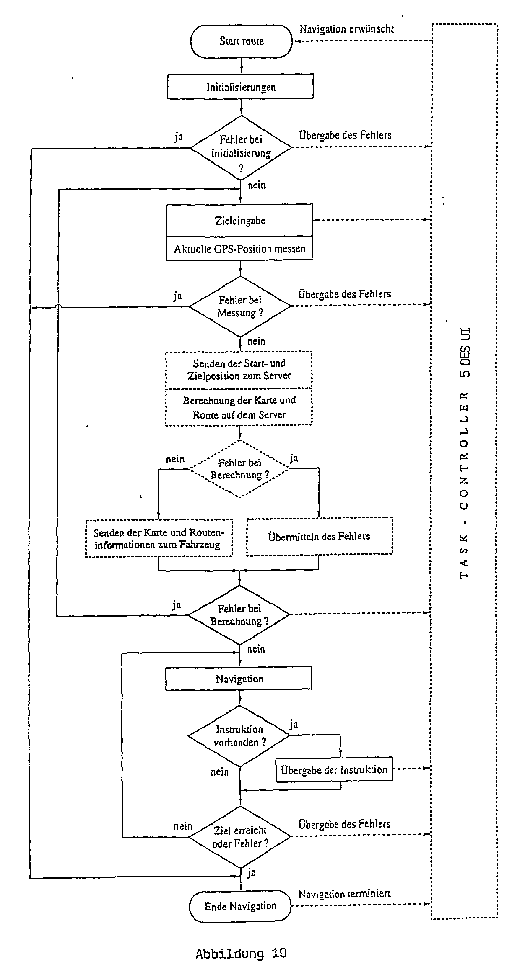

Ein Überblick der einzelnen Initialisierungsschritte, die bis zum Beginn der eigentlichen Navigation durchgeführt werden müssen, wird in Abbildung 10 gegeben.

Alle Einstellungen der für das Programm und der Navigation relevanten Werte werden aus einer Konfigurationsdatei geladen und können somit vom Anwender leicht geändert werden. Hier kann z.B. zwischen den Ausgabesprachen Englisch und Deutsch gewählt und die Einstellungen der seriellen Schnittstelle geändert werden. Vor dem Lesen der Konfigurationsdatei werden alle Variablen mit einem vordefinierten Wert gesetzt, um eine fehlerhafte Konfiguration zu vermeiden.

Nach Reservierung des Speichers wird die serielle Schnittstelle geöffnet. Zur Sicherstellung einer fehlerfreien Initialisierung und Überprüfung der Empfangseigenschaft des GPS-Empfängers werden vor der Kalkulation der Route die entsprechenden NMEA-Daten gelesen und ausgewertet. Im GGA-Satz kann überprüft werden, ob der GPS-Empfänger über RDS mit Korrekturdaten versorgt wird.

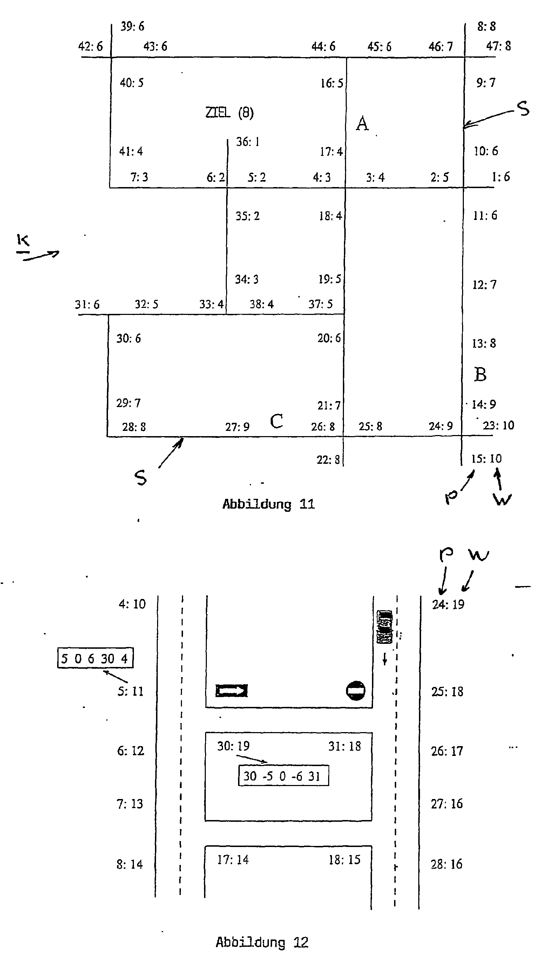

Zur Berechnung der Route kann der bekannte Lee-Algorithmus verwendet werden, der seine Anwendung u.a. in Layout-Programmen für Platinen findet. Dabei wird vom Zielpunkt aus eine Welle mit sog. Entfernungsschritten bzw. Zielführungswerten W ausgebreitet. Der Zielpunkt ZIEL bekommt den Zielführungswert 1, alle umliegenden Punkte P erhalten den Zielführungswert 2 usw. Abbildung 11 zeigt die Zuordnung der Zielführungswerte W zu den Zielführungspunkten P der Beispielkarte K nach Abbildung 9. Hinter den Zielführungspunkten P ist der jeweilige Zielführungswert W notiert.

Mit diesen Zielführungswerten ist eine Führung zum Ziel von jeder Position aus in der Karte möglich. Dazu dient der umliegende Zielführungspunkt mit dem geringsten Zielführungswert als Richtungsweiser, da dieser dem Ziel am nächsten ist. Befindet sich das Fahrzeug z.B. an dem in Abbildung 11 eingetragenen Startpunkt A, wird zunächst der Punkt 17 angesteuert, da dieser den geringeren Zielführungswert (4) hat. Danach werden die Punkte 4 (3), 5 (2) und schließlich das Ziel Punkt 36 (1) anvisiert. Beim Startpunkt B wird das Ziel über die Punkte 13, 12, 11, 2, 3, 4 und 5 erreicht.

Ein Sonderfall tritt bei Startpunkt C auf: Nachdem die Punkte 26, 21 und 20 passiert wurden, haben die Punkte 37 und 19 den gleichen Entfernungsfaktor. Da somit laut Routenberechnung beide Wege dieselbe Entfernung zum Ziel haben, kann z.B. die Instruktion zum Geradeausfahren gewählt werden, weil so ein Abbiegen für den Fahrer unnötig ist.

Bei Einbahnstraßen und Autobahnen ist eine gesonderte Betrachtung bei der Vergabe der Entfernungsschritte nötig. Da die Einbahnstraße nur in eine Richtung befahren werden darf, muß das in den Entfernungsschritten berücksichtigt sein. Die Schritte der Welle müssen entgegengesetzt der erlaubten Fahrtrichtung der Einbahnstraße vergeben werden, da diese vom Zielpunkt aus gestartet wird und somit die Strecke entgegengesetzt der Fahrtrichtung und damit späteren Navigation durchläuft. In Abbildung 12 ist eine Einbahnstraße mit den entsprechenden Entfernungsschritten dargestellt.

Die Welle ist in diesem Beispiel über den Punkt 4 bei Punkt 5 an den Schritt 11 angekommen. Nun sollten die umliegenden Punkte 6 und 30 - Punkt 5 hat schon einen Zielführungswert - mit dem Wert 12 versehen werden. Da Punkt 30 jedoch eine Einbahnstraße ist und negativ auf den Punkt 5 zurückzeigt, wird er zunächst nicht mit einem Zielführungswert versehen. Er kann lediglich von Punkt 31 seinen Zielführungswert erhalten.

Fährt das Fahrzeug nun auf die Einbahnstraße zu, darf es nicht rechts abbiegen. Dies wird auch in den Zielführungswerten deutlich. Der rechte Punkt 31 hat den Zielführungswert 18 und ist damit - wenn das Fahrzeug an der Einbahnstraße angekommen ist - dem aktuellen Punkt 25 gleichwertig. Der Punkt geradeaus (26) hat den Zielführungswert 17 und wird daher als Richtungsweiser bevorzugt.

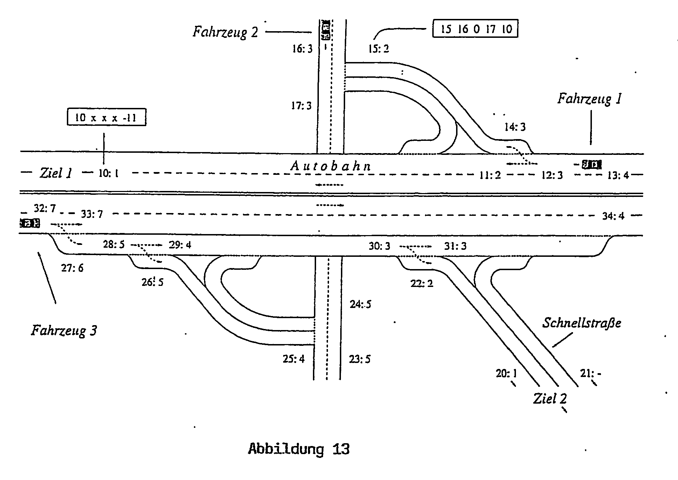

Bei Autobahnen verhält es sich ähnlich. In Abbildung 13 sind zwei Routenberechnungen dargestellt. In der oberen Hälfte liegt das Ziel für Fahrzeug 1 und Fahrzeug 2 auf der linken Seite. Die Welle der Zielführungswerte breitete sich daher von Punkt 10 aus; daher hat dieser Punkt hier den Zielführungswert 1. Der Punkt 11 erhält als umliegender Punkt von 10 den Zielführungswert 2. Entsprechend werden die Zielführungswerte der Punkte 12, 13 und 14 vergeben. Außerdem muß bei der Vergabe der Zielführungswerte für die Autobahnpunkte - hier besonders bei Punkt 10 - darauf geachtet werden, ob ein anderer, unbekannter Punkt einen Verweis "im Rücken" auf die Autobahn hat. Hier verweist Punkt 15 auf Punkt 10. Aus diesem Grund wird bei der Routenberechnung überprüft, ob es sich bei dem Punkt, der den nächsten Zielführungswert für seine umliegenden Punkte vergibt, um eine Autobahn handelt. Dies kann über die vom Betrag her gleichen Elemente der rechten und linken Variablen erkannt werden.

Wird nun das Fahrzeug 1 den Punkt 12 erreichen, hat es die Auswahl zwischen dem Geradeausfahren und dem Rechtsabbiegen. Da der Schritt für das Geradeausfahren niedriger als der aktuelle ist, wird das Programm den Fahrer entlang der Autobahn zum Ziel führen wollen.

Wenn das Fahrzeug 2 das Ziel 1 erreichen wollte, müßte es die Autobahn benutzen. Dies spiegelt sich auch in den Zielführungswerten wider.

In der unteren Hälfte liegt das Ziel 2 für das Fahrzeug 3 unterhalb der Schnellstraße. Hier wird Punkt 20 als Ausgangspunkt der Welle gewählt. Die Zielführungswerte werden analog dem oberen Beispiel vergeben.

Erreicht das Fahrzeug Punkt 32, wird der Fahrer aufgefordert, auf den Verzögerungsstreifen zu wechseln. Ist dies geschehen, wird der Fahrer geradeaus an der Ausfahrt vorbeigeleitet. Danach kommt die Anweisung zum Rechtsabbiegen, wonach der Fahrer sein Ziel erreichen wird.

Da das Ziel im allgemeinen nicht ein Punkt, sondern eine Straße sein wird und sich auf dieser Straße mehrere Punkte befinden, wird vor der Zuweisung der Zielführungswerte eine Routenberechnung mit jedem Punkt der Straße zur Ausgangsposition des Fahrzeuges durchgeführt. Die Routenberechnungen der Punkte werden verglichen, und der zur Ausgangsposition näher liegende Punkt wird als Zielort zur später verwendeten Routenberechnung übernommen.

Nachfolgend soll der Datenaustausch zwischen Server und Client beschrieben werden, und zwar für die Betriebsart der externen Berechnung der Route, d.h. den Datenaustausch mit einem Server. Zunächst werden dem Server in einer Datei die aktuelle Position und der Straßenname des Zieles mitgeteilt. Ferner wird eine Identifizierungsnummer mitgeschickt, die sich in der Antwort wiederfinden wird. Als Identifizierung der Nachricht kann eine Zeichenfolge bestehend aus dem Datum und der Uhrzeit gewählt werden. So kann der Client, also das Navigationsprogramm "*route*" feststellen, ob die erhaltene Karte den angeforderten Bedingungen entspricht. Nachfolgend ist eine Beispieldatei angegeben.

100198145312 5130.892090 712.524292 ZIEL

Nachdem die Daten vom Programm "*route_server*" empfangen wurden, wird die Karte, die aus den beiden Dateien mit den Karteninformationen und den Positionsdaten der Punkte besteht, geladen.

Nun wird versucht, die Startposition zu einem der Punkte zuzuordnen. Als Startpunkt wird der von der direkten Entfernung nächstliegende Punkt angenommen. Dieser Punkt wird nur zur Ermittlung des Zielpunktes benötigt. Zur Navigation ist er nicht relevant, da der Fahrer von jeder Position der Karte zum Ziel geführt werden kann.

Nun wird der exakte Zielpunkt, d.h. der Punkt der Zielstraße, der die bestmögliche Route zum Startpunkt verspricht, ermittelt. Mit diesem Zielpunkt wird nun die Routenberechnung durchgeführt.

Die Karte und das Ergebnis der Routenberechnung werden dem Client zurückgeschickt. Ein Ausschnitt aus dem Beispiel gemäß Abbildung 9 ist nachstehend gezeigt.

```
100198145312 47 10 27 8
110 2 11 0 1 6 5131.0757 712.0444
2 11 1 10 3 1 5 5131.0757 712.0444
3 17 4 18 2 1 4 5131.0789 712.0123
418 3 17 5 1 3 5131.0789 712.0123
5 36 6 35 4 1 2 5131.0811 711.9967
6 35 5 36 7 1 2 5131.0811 711.9967
7 41 0 0 6 1 3 5131.0779 711.9772
8 46 9 47 0 -1 8 5131.0269 712.0426
9 47 8 46 10 2 7 5131.0269 712.0426
                    .
                    .
                    .
46 9 47 8 45 10 7 5131.0269 712.0426
47 8 46 9 0 10 8 5131.0269 712.0426
Meesmannstraße
Herner Straße
Am Gartenkamp
Dorstener Straße
Herzogstraße
Bleckstraße
Eickeler Weg
NOKIA
Keplerweg
Rensingstraße
```

In der ersten Zeile steht zunächst die mit der Anforderung identische Identifizierungsnurnmer, die Anzahl der übermittelten Punkte, die Anzahl der übermittelten Straßennamen, der ermittelte Startpunkt und die Nummer der Zielstraße.

Die folgenden Zeilen enthalten die Karten- und Navigationsinformationen. In dieser Zeile sind nacheinander die Nummer des Punktes, seine umliegenden Punkte (*RIGHT*, *STRAIGHT*, *LEFT*, *BACK*), die Nummer des zum Punkt zugehörigen Straßennamens, der Entfernungsschritt des Punktes (die Navigationsinformation) und die Koordinaten des Punktes untergebracht.

Nun folgen noch die Straßennamen. Ihre jeweilige zugehörige Nummer entspricht der Position, d.h. der Zeile, in der der Name gesendet wird. So entspricht z.B. der *Herner Straße* die Nummer 2.

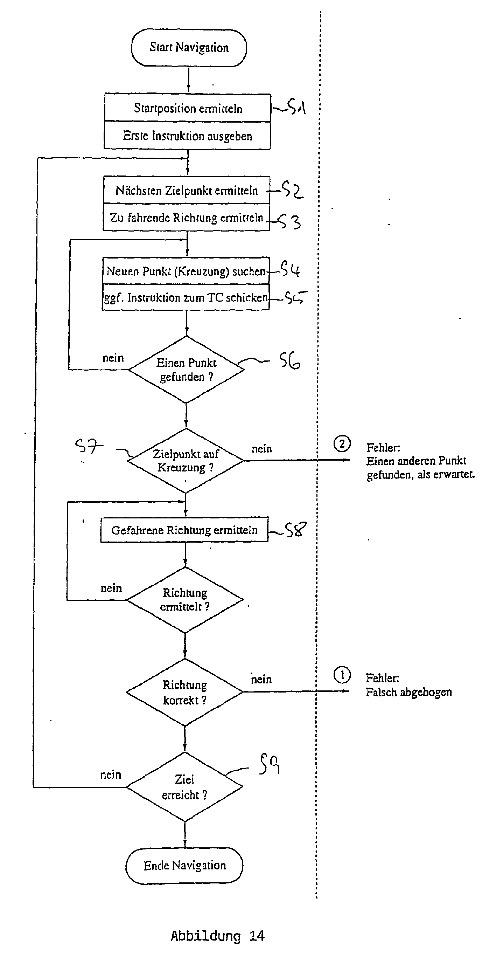

Bei der Navigation selbst werden gemäß Abbildung 14 nacheinander verschiedene Zustände durchlaufen. So muß zu Beginn im Schritt S 1 die Startposition, d.h. die Straße, auf der sich das Fahrzeug befindet, und die Richtung der Fahrbewegung, festgestellt werden.

Ist die kartenbezogene Startposition ermittelt, beginnt die Hauptschleife der Navigation. Die Hauptschleife dieser Navigation ist in Abbildung 14 gezeigt. Zunächst wird hier der anzusteuernde Punkt (der nächste Zielpunkt) im Schritt S 2 und die dort zu fahrende Richtung im Schritt S 3 errechnet.

In diesem Zustand wird nun im Schritt S 4 gewartet, bis ein neuer Punkt gefunden wird. Dabei wird kontinuierlich die Entfernung zur anzusteuernden Kreuzung gemessen und ggf. eine Instruktion im Schritt S 5 zum TC 5 geschickt. Der Algorithmus zur Bestimmung der Entfernung wird später beschrieben.

Ist ein Punkt im Schritt S 6 gefunden und die damit identifizierte Kreuzung identisch mit der errechneten Kreuzung (Schritt S 7), kann nun die gefahrene Richtung im Schritt S 8 ermittelt werden. Diese gemessene Richtung wird mit der errechneten Richtung verglichen.

Wurde richtig abgebogen, wird im Schritt S 9 überprüft, ob das Ziel erreicht wurde. Ist das nicht der Fall, kann der nächste Zielpunkt und die zu fahrende Richtung an diesem Punkt bestimmt werden. Wenn das Ziel erreicht wurde, wird dies mit einer speziellen Instruktion mitgeteilt und die Navigation beendet.

Befolgt der Fahrer die Fahrinstruktionen, womit er sich an die errechnete Route hält, ist dies die in Abbildung 14 gezeigte Hauptschleife, die den Fahrer zum Ziel führt. In der Abbildung sind charakteristische Punkte für die Fehlerbehandlung mit Ziffern dargestellt. Diese werden später noch aufgelistet.

Nachfolgend sollen einige Variablen des Programms "*route*" erläutert werden. Die Tabelle 8 listet die verwendeten Variablen-Kurzformen, die Variablennamen im Programm und eine dazugehörige Erläuterung auf.

Die Variablen sind im Programm in Strukturen untergebracht. An die jeweiligen Funktionen wird ein Zeiger auf die Strukturen übergeben. Da somit eine Adressierung der Variablen erfolgt, werden sie mit dem Elementkennzeichnungs-Operator "->" angesprochen.

**Tabelle 8: Die relevanten Variablen des Programms *"route"***

| Variable | Name im Programm | Erläuterung |
|---|---|---|
| point[*x*][*u*] | card→point[*x*][*u*] | Für Punkt *x* alle umliegenden Punkte |
| | point[*x*][HIMSELF] | Im Vektor für Punkt *x* der Punkt selber |
| | point[*x*][RIGHT] | Für Punkt *x* der rechts liegende Punkt |
| | point[*x*][STRAIGHT] | Für Punkt *x* der Punkt geradeaus |
| | point[*x*][LEFT] | Für Punkt *x* der links liegende Punkt |
| | point[*x*][BACK] | Für Punkt *x* der "im Rücken" liegende Punkt |
| pos | pos→position | Der zuletzt passierte Punkt der Karte |
| pre | pos→pre_position | Der vorletzte passierte Punkt der Karte |
| post | pos→post_position | Der nächste anzusteuernde Punkt der_ Karte |
| dir | pos→orig_dir | Die nächste zu fahrende Richtung bei post |
| drived_dir | pos→drived_dir | Die gefahrene (ermittelte) Richtung |
| street[*x*] | card→street[*x*] | Der Verweis des Punktes auf den Straßennamen |
| streetname[*x*] | card→street_name[ street[*x*]] | Der Straßenname des Punktes *x* |
| post_dir | card→point[post][dir] | Der Punkt, der an der nächsten Kreuzung nach dem Abbiegen erreicht wird |
| streetname[ post_dir] | card→street_name[ street[ point[post][dir] ]] | Der Straßenname des Punktes post_dir |
| dest_street | card→dest_street | Nummer der Ziel-Straße |
| x = dest | card→street[*x*] == card→dest_street | Verweis der Straßennummer ist gleich Nummer der Ziel-Straße? (Ziel erreicht?) |
| status | pos→route_status | Zustand der Navigation siehe Tabelle 5.2 |

Mit Hilfe der Aufzählung *HIMSELF*=0, *RIGHT*=1, *STRAIGHT*=2, *LEFT*=3 und *BACK*=4 werden zum einen die Elemente einer Zeile der Kartenmatrix angesprochen, zum anderen kann mit ihnen die Richtungsinformation gespeichert werden. Ferner wurde für die Kompaß-Navigation das Element *NODIR* = 5 angefügt. Auf seine Bedeutung wird später näher eingegangen.

In Tabelle 9 sind die möglichen Zustände der Navigation - damit die Werte, welche die Variable pos->route_status annehmen kann - aufgelistet.

**Tabelle 9: Die Zustände der Variable *pos->route_status***

| Zustand | Erläuterung |
|---|---|
| NoRoute | Keine Karte und Route vorhanden |
| RouteIsCalculated | Berechnete Route ist vom Server empfangen |
| RouteIsCalculatedAndGaveInstr | Instruktion "Route ist berechnet" wurde gegeben |
| FindStartPosition | Ermittlung der Startposition |
| FindStartDirection | Ermittlung der Fahrtrichtung bei der Startposition |
| PrepareToSearchNewPosition | Vorbereitungen, um einen neuen Punkt zu suchen |
| SearchNewPosition | Neuen Punkt suchen und ggf. Instruktion geben |
| SearchNewPositionAndGaveInstr | Neuen Punkt suchen, Instruktion wurde geben |
| FindDrivenDirection | Fahrtrichtung ermitteln |
| DrivingAlternativeRoute | Alternative Route errechnen |
| DriveOverBorder | Die Karte ist verlassen worden, Instruktion "Bitte umdrehen" |
| PrepareToSearchWayInOutland | Vorbereitungen, um neuen Weg außerhalb der Karte zu suchen |
| SearchWayInOutland | Neuen Weg außerhalb der Karte suchen, wenn nicht umgedreht wurde |
| OrientateWithArrow | Navigation über Pfeil |
| ReachedDestination | Ziel wurde erreicht |

Die Zustände können in fünf Bereiche unterteilt werden. Der erste Bereich, die ersten drei Zustände, werden noch vor Fahrtbeginn durchlaufen. Der folgende zweite Bereich befaßt sich mit der Bestimmung der Startposition und der Ausgabe der ersten Instruktion. Der dritte Bereich enthält die Zustände für das noch zu beschreibende fehlerfreie Navigieren. Der vierte Bereich ruft die Funktionen auf, die auf ein Fehlverhalten des Fahrers reagieren. Der fünfte und letzte Bereich besteht nur aus dem terminierenden Zustand, dem Erreichen des Zieles.

Das Erstellen und Senden der Instruktionen wird nunmehr beschrieben.

Eine Instruktion besteht aus dem Satz, der zur sprachlichen Ausgabe dienen soll. Er beinhaltet in der Regel neben der Richtung und dem dort anzutreffenden Straßennamen die Entfernung zum erwarteten Punkt. Die Entfernung wird vorher auf einen leicht verständlichen, geraden Wert abgerundet. So wird eine Distanz von 79 Meter auf 70 Meter abgerundet, die Distanz von 179 Meter wird eine Ausgabe von 150 Meter zur Folge haben, und 379 Meter wird auf 300 Meter verringert. Durch das Abrunden wird neben der besseren Verständlichkeit eine grobe Korrektur der Differenz zwischen Messung der Distanz und Ausgabe der Instruktion vorgenommen.

Zu Beginn der Fahrt wird der Fahrer mit der Ausgabe "*Ihre Route ist berechnet. Eine gute Fahrt.*" darauf hingewiesen, daß das System bereit ist.

Muß nun eine Fahrtinstruktion gegeben werden, wird bei vorhandener Distanz und bekanntem Straßennamen z.B. die Instruktion "*Bitte in 800 Metern (rechts) links in die Meesmannstraße abbiegen*" erzeugt. Die letzte Instruktion wird verkürzt, da sich der Fahrer hier schon an der Kreuzung befindet und eine sofortige Reaktion zu erwarten ist. Die Instruktion wird schlicht "*Bitte rechts (links) abbiegen*" lauten.

Ist die Richtung geradeaus, wird nur "*Bitte (in 800 Metern) der Straße geradeaus folgen*" ohne Straßenname erzeugt, da dieser meist identisch mit dem aktuellen Namen ist. Bei der Richtung "*BACK*" erfolgt die Ausgabe "*Bitte möglichst bald umdrehen*". Eine Richtungsangabe oder ein Straßenname ergibt hier keinen Sinn.

Bei der Kompaß-Navigation, bei der der Fahrer über einen Pfeil geführt wird, weist die einmalige Ausgabe "*Bitte dem Pfeil folgen*" den Fahrer darauf hin.

Bei Zielankunft bzw. dem baldigen Erreichen des Ziels wird die entsprechende Information "*Sie haben Ihr Ziel*

*erreicht*" oder "*Sie erreichen in ... Metern Ihr Ziel*" ausgegeben.

Die sprachlichen Ausgaben können auch auf die englische Sprache umgestellt werden.

Dieser in ASCII-Format vorliegende Navigationshinweis wird mittels TCP/IP über den TC einem anderen, parallel laufenden Prozeß, dem "*Text to Speech*"-Prozeß (TTS), übersendet. Diese in einer HTML-ähnlichen Sprache (**H**ypertext **M**arkup **L**anguage: Eine im WWW genutzte Seitenbeschreibungssprache) verfaßte Nachricht ist nachfolgend zu sehen.

In der Kopfzeile stehen für den TC verständliche Informationen. Sie enthält eine Kurzbeschreibung (Navigation), das auszuführende Kommando (DISPLAY), in diesem Falle die Ausgabe, die Anzahl der Nachrichten (1), den Modus der Nachricht (HTML) und den Absender (NAV für Navigation).

```
<_HEAD LABEL="Navigation" COMMAND="DISPLAY" NO_OF_CARDS="1"
MODE="HTML" SENDER="NAV">


<_SABLE>
In 800 meters. Please turn right into Eickeler Weg.
</_SABLE>
```

Der zweimalige Befehl <_SABLE> gibt dem TC an, daß die folgende Nachricht an den Prozeß TTS weitergeleitet werden soll. Dieser TTS-Prozeß wird danach die Zeichenfolge sprachlich wiedergeben. Mit dem Punkt nach der Entfernungsangabe soll eine bessere Verständlichkeit des Satzes erreicht werden, da hier eine kleine Pause eingefügt wird.

Neben der Audio-Ausgabe wird auf dem Bildschirm des Demonstrators ein visueller Hinweis, wie z.B. ein Pfeil, ausgegeben. Nachfolgende Abbildung zeigt die entsprechende HTML-Nachricht und die dazugehörige Kopfzeile.

```
<_HEAD LABEL="Navigation" COMMAND="DISPLAY" NO_OF_CARDS="1"
MODE="HTML" SENDER="NAV">

<HTML>
<HEAD>
   <TITLE> Navigation Instruction </TITLE>
</HEAD>

<BODY>
   <CENTER> <H1> Eickeler Weg </H1> </CENTER> <BR> <BR>
<CENTER> <IMG SRC=file:/projects/stpad/visage/sw/graphics/icons/right.gif>
</CENTER>
   <CENTER> <H1> in 800 m </H1> </CENTER> <BR> <BR>
</BODY>
</HTML>
```

Vergleichbar mit der Übertragung zum TTS wird dem Prozeß *NPH_DISPLAY*, der die graphischen Ausgaben verwaltet, nach der entsprechenden Kopfzeile die Information des Straßennamens, der Name des auszugebenden Bildes und die Entfernung zur nächsten Aktion übersendet. In Abbildung 15 ist die im Demonstrator realisierte Ausgabe dargestellt.

Nachfolgend soll die Berechnung der Entfernung erläutert werden.

Der GPS-Empfänger liefert die Kugelkoordinaten, d.h. den Längen- und Breitengrad, der aktuellen Position. Diese Daten werden in Grad mit Minuten und Sekunden als Nachkommastellen bereitgestellt. Ferner erhält es für den Breitengrad die Referenz der Halbkugel - für Europa z.B. immer *N* für Nord - und für den Längengrad die Richtung des Winkels, *W* für West oder *E* für Ost.

Zur Bestimmung der Entfernung wird das vom GPS-Empfänger gelieferte Format zunächst in einem Fließkommawert und anschließend in Radiant umgerechnet. Tabelle 10 zeigt die gelieferten Positionsdaten für zwei aufgenommene Beispielpunkte und deren umgerechnete Werte.

**Tabelle 10: Umrechnung des Breiten- und Längengrades**

|  | Punkt A: Bochum-Riemke | | Punkt B: Münster-Süd | |
|---|---|---|---|---|
| Daten des GPS-Empfängers | 5131.0792 | 712.6727 | 5155.2385 | 733.5124 |
| Daten als Fließkommawert | 51.5189 | 7.2187 | 51.9233 | 7.5642 |
| Daten in Radiant | 0.89917385 | 0.12598984 | 0.90623240 | 0.13202078 |

Nun können diese Kugelkoordinaten in kartesische Koordinaten umgerechnet werden. Die Beziehung ist in Gleichung 1 wiedergegeben. Der Breitengrad In [*rad*] ist mit $\varphi$ und der Längengrad - ebenso in [*rad*] - mit $\lambda$ bezeichnet. Der Erdradius $R$ wird in der weiteren Rechnung als konstant angenommen. Bei den Berechnungen wurde der Wert 6365 *km* gewählt.

$$x = R\cos(\varphi)\cos(\lambda) \qquad y = R\cos(\varphi)\sin(\lambda) \qquad z = R\sin(\varphi). \tag{1}$$

Der Längengrad eines Punktes, hier Punkt A, wird als Bezugspunkt verwendet. Somit können die Koordinaten der Punkte A und B zu

$$\vec{a} = \begin{pmatrix} R\cos(\varphi_A) \\ 0 \\ R\sin(\varphi_A) \end{pmatrix} \qquad \vec{b} = \begin{pmatrix} R\cos(\varphi_B)\cos(\lambda_B - \lambda_A) \\ R\cos(\varphi_B)\sin(\lambda_B - \lambda_A) \\ R\sin(\varphi_B) \end{pmatrix} \tag{2}$$

vereinfacht werden.

Die Entfernung $d$ kann nun über den Betrag des Vektors $\vec{d} = \vec{b} - \vec{a}$ berechnet werden. Genauer ist jedoch die Berechnung mit Hilfe des Scalarprodukts. Damit kann über den einschließenden Winkel der beiden Vektoren die Länge des Kreisbogens errechnet werden.

$$d = \frac{2\pi r\alpha[grad]}{360} = r * \alpha[rad] = R * \arccos\left(\frac{\vec{a}\,\vec{b}}{|\vec{a}||\vec{b}|}\right) \tag{3}$$

Die Beträge entsprechen dem Radius $R$ und können somit nach dem Ausklammern von $R$ im Zähler gekürzt werden. Dadurch erhält man für die Entfernung $d$ die Gleichung 4.

$$d = R * \arccos(x_A x_B + y_A y_B + z_A z_B) \tag{4}$$
$$= R * \arccos(\cos(\varphi_A)\cos(\varphi_B)\cos(\lambda_B - \lambda_A) + \sin(\varphi_A)\sin(\varphi_B))$$

Nun soll die kartenbezogene Ermittlung der Startposition erläutert werden.
Um beim Start der Navigation eine Anfangsbedingung zu schaffen, müssen die Position in der Karte, d.h. die Straße, auf der sich das Fahrzeug befindet, und die Fahrtrichtung des Fahrzeugs bestimmt werden. Dafür die Straßen in der Regel nur die Koordinaten der beiden Endpunkte bekannt sind und keine Zwischenpunkte aufgenommen wurden, ist der reale Verlauf der Straße nicht bekannt. Es wird angenommen, daß die Straße eine Linie zwischen den Endpunkten ist. Die Position des Fahrzeugs wird im allgemeinen neben dieser idealisierten Linie sein.

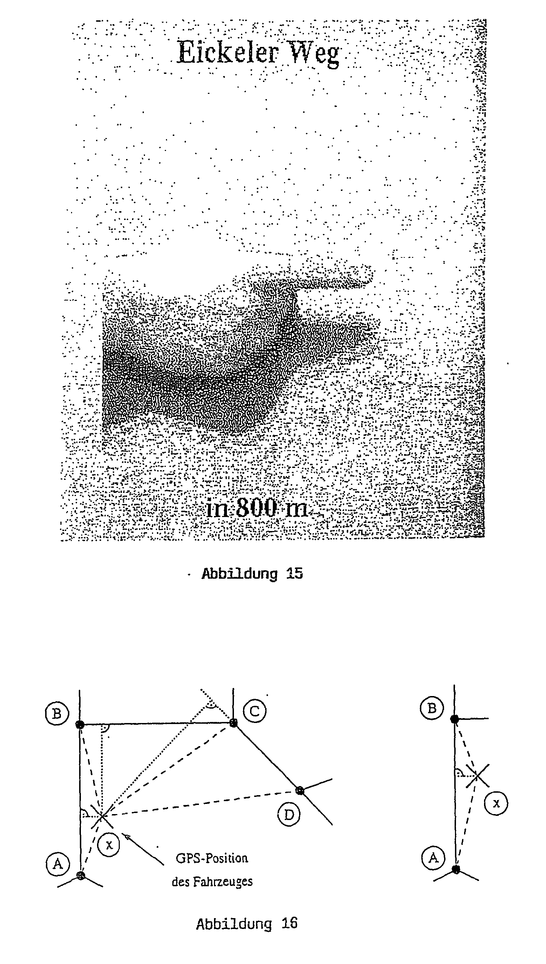

Um festzustellen, auf welcher Straße sich das Fahrzeug befindet, werden zunächst alle in der Nähe befindlichen Straßen gesucht und überprüft, ob sich das Fahrzeug auf diesen Straßen aufhalten könnte. Dazu werden die Länge der Straße und die Entfernungen der Endpunkte der Straße von der aktuellen GPS-Position errechnet. Ist nur ein errechnetes Teilstück größer als die Straßenlänge, könnte sich das Fahrzeug nicht auf dieser Straße befinden. In Abbildung 16 ist z.B. die Distanz $\overline{AB}$ größer als die Teilstrecken vom Fahrzeug zu den Endpunkten der Straße, also $\overline{Ax}$ und $\overline{Bx}$.

Ebenso verhält es sich bei der Straße $\overline{BC}$. Das Fahrzeug kann sich jedoch auch nicht auf der Straße $\overline{CD}$ befinden, da das Teilstück $\overline{Dx}$ die längste Seite im Dreieck $\overline{CDx}$ sein wird.

Um den wahrscheinlichsten Aufenthaltsort in der Karte zu ermitteln, wird nun der orthogonale Abstand zu den in Frage kommenden Straßen gemessen. Die Straße mit dem geringsten Abstand, in dem Beispiel ist dies Straße $\overline{AB},$, wird als Position in der Karte angenommen.

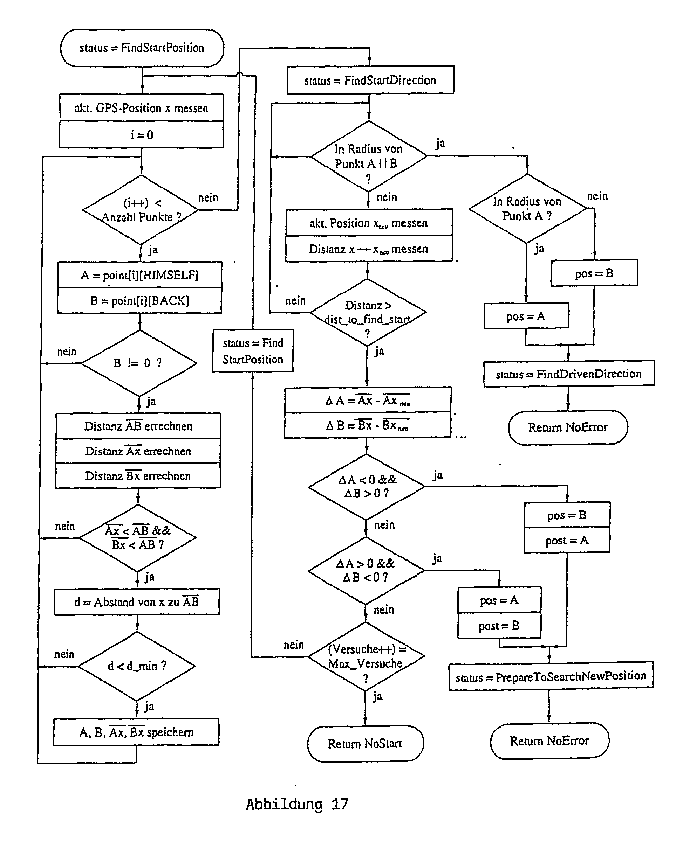

Anschließend muß die Richtung des Fahrzeuges ermittelt werden. Hierzu muß eine Positionsänderung abgewartet werden. Nachdem das Fahrzeug eine definierte Strecke zurückgelegt hat, wird - wie auch in Abbildung 16 zu sehen ist - erneut die Entfernung zu den beiden Endpunkten gemessen. Befindet sich das Fahrzeug auf der erwarteten Straße und verläuft diese nahezu geradlinig zwischen den beiden Endpunkten, muß sich das Fahrzeug einem der Endpunkte nähern (B) und von dem zweiten (A) entfernen. Die Differenzen der Entfernungen von den beiden Endpunkten der vermuteten Straße müssen sich daher vor und nach der Bewegung im Vorzeichen unterscheiden. Damit kann auf den Punkt, auf den sich das Fahrzeug zubewegt und auf den Punkt, der als letztes passiert wurde, geschlossen werden. In Abbildung 17 ist der Programmablaufplan für die Ermittlung der Startposition dargestellt.

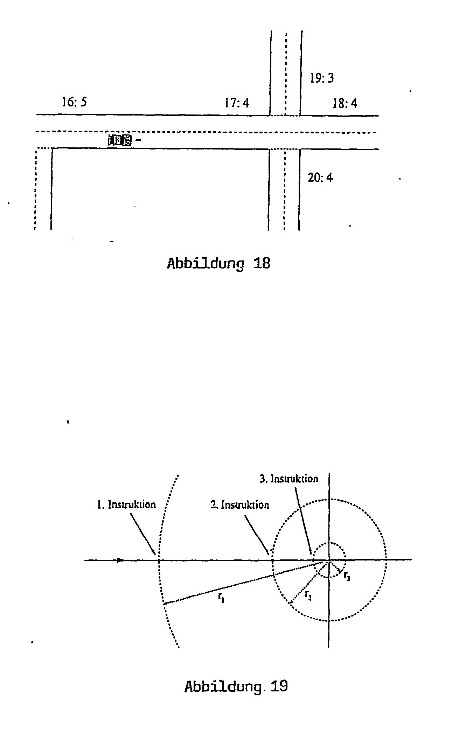

Wird der Zustand erreicht, in dem auf eine Kreuzung zugefahren wird, steht der anzuvisierende Punkt in der Variablen *post*. In Abbildung 18 ist dies der Punkt 17. Zunächst wird der zuletzt passierte Punkt (16) in der Variablen *pre* gesichert. Danach wird die an der nächsten Kreuzung zu fahrende Richtung ermittelt. Diese Richtungsinformation wird in der Varibalen *dir* gespeichert. In Abbildung 18 wird so die Variable *dir* mit dem Wert *LEFT* belegt. Da diese Richtungsermittlung für die relevante Position einmalig geschehen kann, der folgende Zustand jedoch öfter durchlaufen wird, wird dieses dem Zustand *PrepareToSearchNewPosition* zugeordnet.

Der nun folgenden Zustand *SearchNewPosition* wird solange durchlaufen, bis das Fahrzeug an der Kreuzung oder an einem anderen, sich nicht auf der Kreuzung befindlichen Punkt der Karte angekommen ist.

Währenddessen sollen Instruktionen dem Fahrer bei drei verschiedenen Distanzen $d_i$ auf die zu fahrende Richtung hinweisen. Dazu wird mit jeder gemessenen GPS-Position $x$ die Entfernung $d(x)$ zu dem anzusteuernden Punkt gemessen und mit drei vordefinierten Radien, die den Entfernungen der Instruktionen entsprechen sollen, verglichen. Die erste Instruktion wird z.B. gegeben, wenn die Entfernung $d(x)$ kleiner als ein entsprechender Radius $r_1$ ist und die erste Instruktion noch nicht gegeben wurde. Wäre die Entfernung $d(x)$ größer als der Radius $r_1$, würde gewartet, bis das Fahrzeug in den Radius eintritt. Abbildung 19 zeigt die Radien und die damit verbundenen Instruktionen.

Die erste Instruktion soll dem Fahrer mit einer ausreichenden Entfernung die Möglichkeit bieten, sich vorzubereiten, d.h. sich beispielsweise richtig einzuordnen. Sie wird bei Eintreten in den Radius $r_1$ um die Koordinaten des erwarteten Punktes gegeben. Die zweite Instruktion erfolgt in kurzer Distanz $d_2$ vor der zu tätigenden Aktion.

Die Distanzen sind für den Stadtverkehr und der damit verbundenen niedrigen Geschwindigkeit dimensioniert. Da z. B. bei Autobahnen die Instruktion früher zu geben ist, wird zu den Radien $r_1$ und $r_2$ eine Strecke $s_v$ addiert, die abhängig von der Geschwindigkeit $v$ des Fahrzeugs ist. Um $s_v$ zu erhalten, wird das Quadrat der Geschwindigkeit (in *km/h*) durch den Faktor 8 geteilt. Der Divisor 8 hat sich bei Testfahrten als günstig erwiesen. Mit ihm wird z. B. bei einer Geschwindigkeit von 100 *km/h* die erste Instruktion bei einer Distanz von ungefähr $d_1 = 1{,}5$ *km* erfolgen. Die Abhängigkeit des Radius von der Geschwindigkeit des Fahrzeuges ist in Gleichung 5 wiedergegeben.

$$d_i = \begin{cases} r_i & : \quad d(x) \le r_i \\ r_i + s_v & : \quad d(x) > r_i \end{cases} \qquad \text{mit} \quad s_v = v^2/8 \qquad (5)$$

Die dritte und letzte Instruktion bezüglich des nächsten Punktes erfolgt, sobald die Kreuzung erkannt wurde und gibt sprachlich im Gegensatz zu den ersten beiden Instruktionen nur die zu fahrende Richtung wieder.

Befinden sich die gemessenen Positionskoordinaten innerhalb des Kreises mit dem Radius $r_3$ um den gesuchten Punkt, wird dieser Punkt als Standort erkannt. Dieser Radius ist im Gegensatz zu den beiden anderen nicht von der Geschwindigkeit abhängig.

Ist das Fahrzeug an der erwarteten Kreuzung angekommen, stimmt der aktuelle Standort des Fahrzeugs, der als Punkt in *pos* gespeichert ist, mit dem erwarteten Punkt *post* überein. Nun kann der nächste anzusteuernde Punkt inpost erfaßt werden und die dritte Instruktion gegeben werden. Um die tatsächlich gefahrene Richtung an der Kreuzung zu ermitteln, wird in den Zustand *FindDrivenDirection* gewechselt. Dieser Zustand wird später beschrieben.

Ferner muß überprüft werden, ob das Ziel bzw. der zu Beginn der Navigation eingegebene Straßenname erreicht wurde. In diesem Fall wird der entsprechende Hinweis auf das Erreichen des Ziels ausgegeben und in den Zustand *ReachedDestination* gewechselt, der dies deutlich macht.

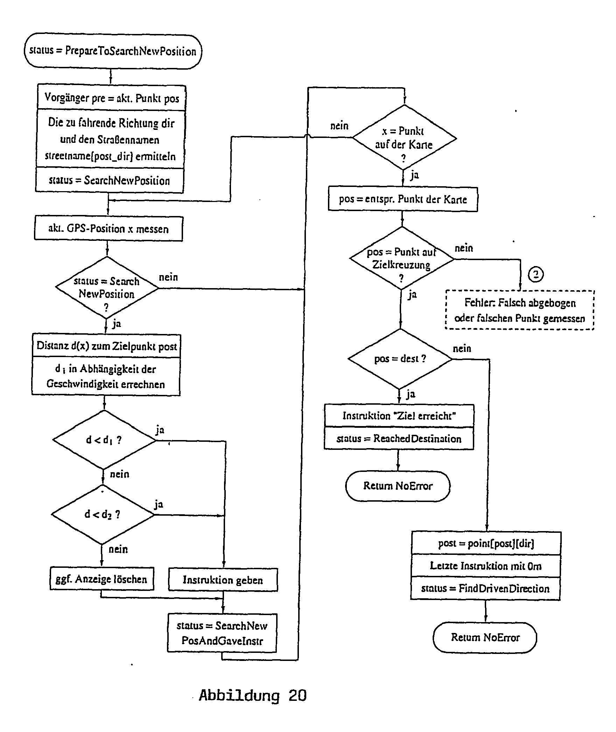

Abbildung 20 gibt den Programmablaufplan des Zufahrens auf den erwarteten Punkt wieder.

Die gefahrene Richtung wird mit Hilfe der von GPS-Empfänger errechneten Ausrichtung der Fahrzeugbewegung gegenüber dem Nordpol ermittelt. Diese Ausrichtung wird bei Eintreten in den zuvor beschriebenen Radius $r_3$ um die Kreuzung gespeichert.

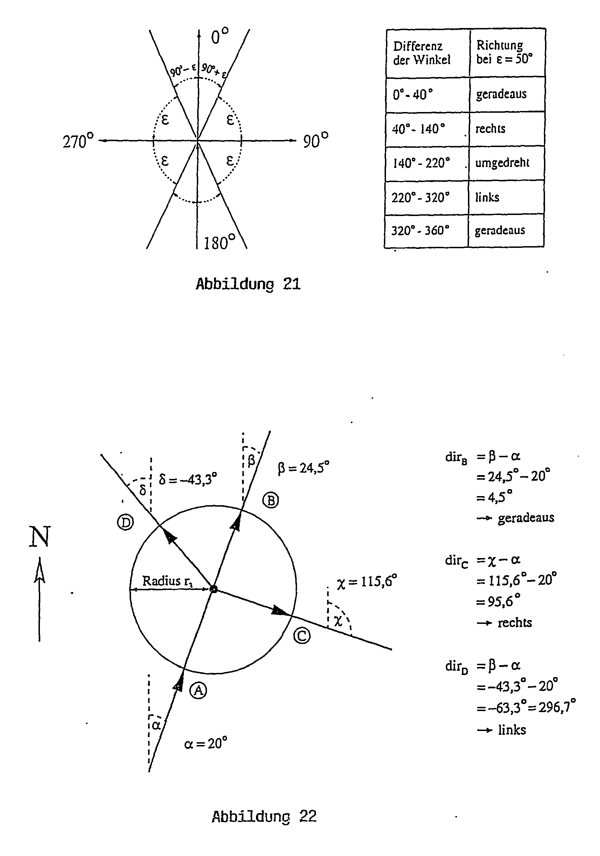

Nun wartet das Programm "*route*", bis dieser Kreis mit dem Radius $r_3$ wieder verlassen wird. Die Ausrichtung wird erneut ermittelt und von der vorherigen abgezogen. Ist das Ergebnis negativ, werden $360°$ hinzu addiert. Mit dieser Differenz ist, wie Abbildung 21 zeigt, eine Beurteilung der gefahrenen Richtung möglich. Schwankt die Differenz um $90°$, ist davon auszugehen, daß das Fahrzeug rechts abgebogen ist. Der Differenzwinkel wird mit einer Toleranz von $\pm\varepsilon$ zugelassen. Für die Erkennung der linken Richtung muß die Differenz zwischen $270°$ $\pm\varepsilon$ liegen.

Wird geradeaus gefahren, verändert sich der Winkel nur gering. Daher braucht die Toleranzgrenze hier nicht so groß sein wie beim Abbiegen. Das Geradeausfahren wird bei einer Toleranzgrenze von $\pm$ ($90°$- ε), das Umdrehen bei 180 von $\pm$ ($90°$- ε) erkannt.

In Abbildung 22 ist eine Kreuzung, die das Ermitteln der Richtung an einem Beispiel verdeutlichen soll, dargestellt.

Die Bestimmung der gefahrenen Richtung auf einer Autobahn jedoch kann mit Hilfe der oben beschriebenen Methode nicht durchgeführt werden. Zum einen wird der relevante Punkt der Abfahrt am oder noch vor dem Verzögerungsstreifen aufgenommen, zum anderen ist häufig bei einer Autobahnabfahrt keine Winkeländerung festzustellen, da die Abfahrt parallel zur Autobahn führt. Daher wird bei einer Autobahn die gefahrene Richtung mit der ermittelten gleichgesetzt und dadurch angenommen, daß der Fahrer der Anordnung gefolgt ist. Die gefahrene Richtung wird mit dem Finden des nächsten Punktes überprüft.

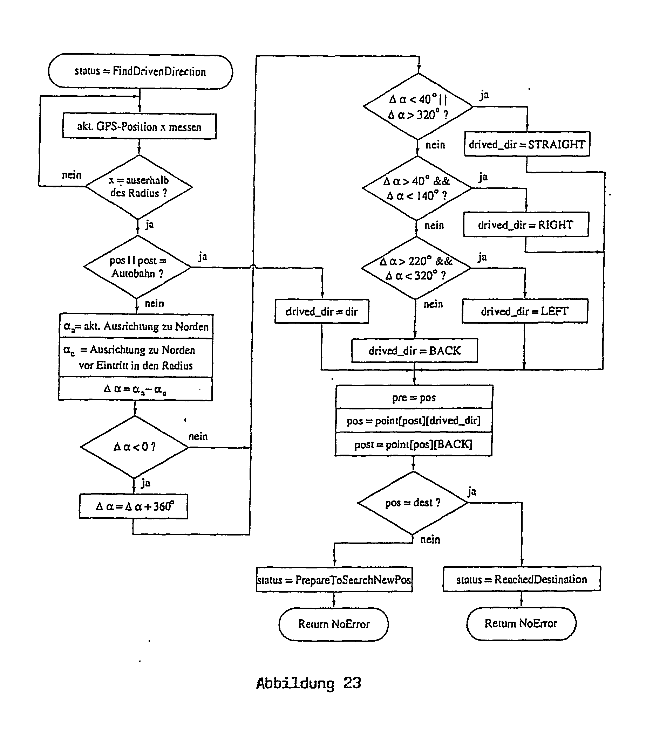

Nach dem Abbiegen muß - vergleichbar mit dem Zufahren auf den erwarteten Punkt - geprüft werden, ob das Ziel erreicht wurde. Ist dies nicht der Fall, kann der nächste anzusteuernde Punkt, der sich "im Rücken" des aktuellen Punktes befindet, in *post* gespeichert werden. Nun wird zurück in den Status *PrepareToSearchNewPosition* gewechselt. Die schematische Darstellung der Richtungserkennung ist in Abbildung 23 dargestellt.

Dieser Wechsel zwischen dem Zufahren auf den gewünschten Punkt und der Findung der aktuellen Richtung geschieht solange, bis das Ziel erreicht wird. Dann wird die Instruktion mit der Information des erreichten Zieles ausgegeben, und das Programm kann beendet werden.

Die möglichen Fehler und ihre Folgen sollen im folgenden Abschnitt diskutiert werden.

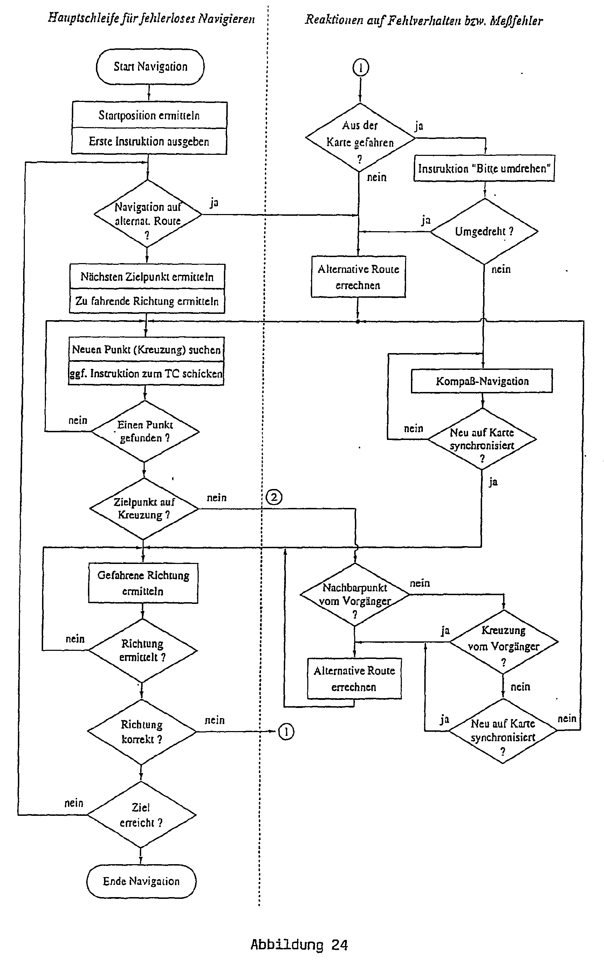

Grundsätzlich gibt es zwei Fehler, die bei einer Navigation auftreten können. In Abbildung 24 sind diese dem Programmablaufplan der fehlerfreien Navigation aus Abbildung 14 zugefügt.

Ein Fehler ist das falsche Abbiegen an einer Abzweigung bzw. Kreuzung. Dies wird bei der Richtungserkennung (Ziffer 1) festgestellt. Ist der Fehler erkannt, muß zunächst geprüft werden, ob das Gebiet der digitalen, vom Server gesendeten Karte verlassen wurde, d.h., ob der Fahrer über den Rand der Karte gefahren ist. Ist dies nicht der Fall, kann eine neue Route, die den Fahrer "möglichst optimal" zur vorhandenen Strecke bzw. zum Ziel führt, errechnet werden. Die Berechnung dieser alternativen Route wird noch beschrieben.

Ferner kann es vorkommen, daß der gefundene Punkt nicht mit dem erwarteten Zielpunkt bzw. der Kreuzung übereinstimmt. Dieser Fehlerfall wird im Programmablaufplan bei Ziffer 2 erkannt. Er kann verschiedene Ursachen haben:

- Die Richtungserkennung war fehlerhaft, und es wurde somit ein Nachbarpunkt der zuletzt passierten Kreuzung gefunden.

- Es wird ein Punkt der zuletzt passierten Kreuzung gefunden, da das Fahrzeug gewendet hat.

- Es werden zu der aktuellen Position zusammenhanglose Punkte gefunden. Dies kann verschiedene Ursachen haben: Zum einen könnten Meßfehler aufgetreten sein, zum anderen kann sich das Fahrzeug in der Nähe der gefundenen Punkte befinden, jedoch keine direkte Verbindung zu diesen haben. Dies ist beim Befahren von Autobahnen häufig zu beobachten, da die Punkte der zu überquerenden Straßen sehr dicht an der Autobahn liegen können. Ferner besteht die Möglichkeit, daß sich das Fahrzeug tatsächlich an der ermittelten Position in der Karte befindet. Dies kann an fehlenden Positionsangaben durch mangelnde GPS-Positionsdaten bzw. einer ungenauen Karte oder an dem zwischenzeitlichen Befahren einer nicht in der Karte existierenden Straße liegen.

Die Reaktion auf die möglichen Fehler werden noch vorgestellt.

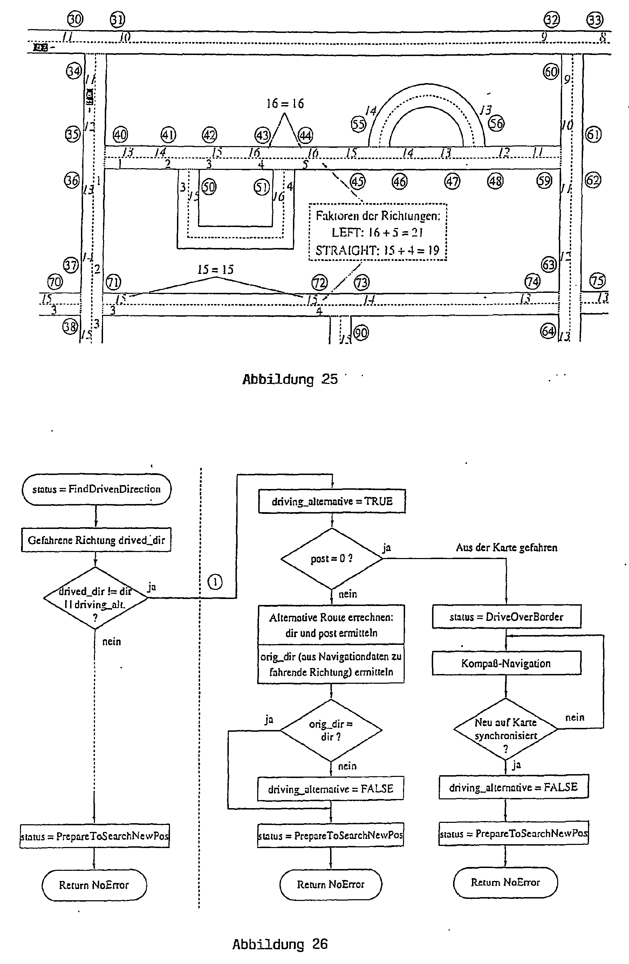

Ist das Fahrzeug vom errechneten, "optimalen" Weg abgekommen, kann es nicht mehr über die vom Server errechneten Zielführungspunkte geführt werden. Daher wird versucht, über das gleiche Prinzip, wie es bei der Routenberechnung zuvor angewendet wurde, auf die errechnete Route zurückzufinden. Die Voraussetzungen zur Berechnung sind jedoch umgekehrt: Das Ziel - der optimale Weg - ist nicht als Punkt bekannt. Daher kann der Ursprung der Welle des Lee-Algorithmus nicht das Ziel sein. Es wird, wie in Abbildung 25 gezeigt, von der Kreuzung, die als nächstes erreicht wird, von jedem abzweigenden Punkt eine Welle - in dem Beispiel die Punkte 36 und 40 - gestartet. Diese wird solange fortgesetzt, bis sie auf nicht mehr steigende Zielführungswerte trifft. Somit ist eine Führung zum Ziel wieder möglich. Im Beispiel ist für die Welle von Punkt 40 bei dem fünften Zielführungswert der originale Zielführungswert identisch mit dem entsprechenden Wert vom vierten Schritt. Daher kann ab hier wieder eine fehlerfreie Navigation erfolgen.

Der errechnete Wert dieser Welle wird mit dem gefundenen Zielführungswert addiert. Das Ergebnis dient als Kriterium für diese Richtung.

Nachdem in allen fahrbaren Richtungen ein Ergebnis gefunden ist, wird die Richtung mit der geringsten Entfernung zum Ziel in der Variablen *dir* gespeichert. In diesem Fall wird *dir* = *STRAIGHT* gesetzt.

Nun wird, wie bei der fehlerhaften Navigation, gewartet, bis die Kreuzung erreicht wird und der Fahrer abgebogen ist.

Selbst wenn der Fahrer sich diesmal an die Instruktion des Programms gehalten hat, muß nun erneut eine alternative Route errechnet werden, da die Zielführungswerte des Servers immer noch keine Gültigkeit besitzen. Daher wird beim erstmaligen Berechnen einer alternativen Route die Variable *drive_alternative* auf *TRUE* gesetzt, um nun wieder aus der Hauptschleife des fehlerfreien Fahrens eine Berechnung zu starten. Im Programm ist diese Variable in der Struktur *pos* untergebracht und heißt *pos->drive_alternative*.

Biegt das Fahrzeug an einer Kreuzung auch nach den vom Server gelieferten Zielführungswerten richtig ab, erkennt das Programm, daß eine fehlerfreie Navigation wieder möglich ist.

Bei der Berechnung kann es vorkommen, daß keine Richtung zum Ziel führt bzw. der Umweg zu lang ist. Um weite Umwege mit der Instruktion "*Bitte umdrehen*" zu unterbinden, wurde ein Wert eingeführt, der die ausgesendete Welle der Richtungen bei einem Überschreiten eines Schwellwertes stoppt. Dieser Wert kann individuell eingestellt werden.

Zur Reaktion auf die möglichen Fehler soll der Fall des falschen Abbiegens betrachtet werden. Nachdem *drive_alternative* auf *TRUE* gesetzt und der Zustand der Navigation in *DrivingAlternative* gewechselt wurde, muß überprüft werden, ob das Fahrzeug sich außerhalb der Karte befindet. Wurde über den Rand der Karte gefahren, wird zu der früher beschriebenen Kompaß-Navigation gewechselt. Abbildung 26 macht dies mit Hilfe eines Programmablaufplanes deutlich.

Befindet sich das Fahrzeug innerhalb der Karte, kann eine alternative Route errechnet werden. Die zu fahrende Richtung steht in der Variablen *dir*, der anzusteuernde Punkt in *post*. Nun wird die Richtung ermittelt, die laut Zielführungswerten des Servers gefahren werden müßte. Ist der Fahrer gerade falsch abgebogen, wird diese *BACK* sein. Wurde jedoch schon öfter eine alternative Route berechnet, können die alternative und die optimale Richtung gleich sein. Somit wäre eine fehlerfreie Navigation wieder möglich, da die alternative Route mit der vom Server errechneten übereinstimmt. Nun wird die Variable *drive_alternative* auf *FALSE* zurückgesetzt, und es kann gewartet werden, bis das Fahrzeug den anzusteuernden Punkt *post* erreicht.

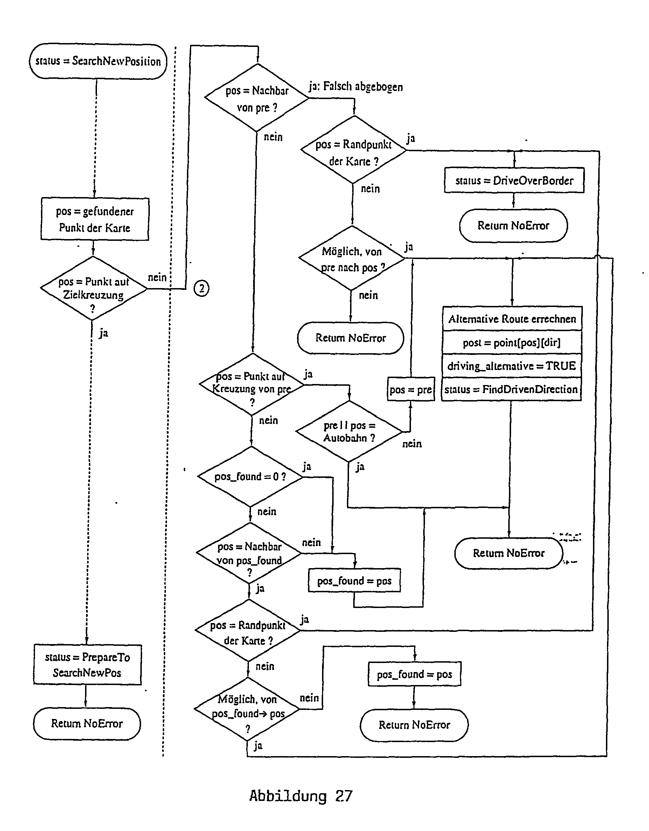

Tritt der zweite mögliche Fehler auf, ist also ein unbekannter Punkt der Karte gefunden, wird zunächst geprüft, ob der gefundene Punkt ein Nachbarpunkt des Vorgängers ist, d.h., ob an der letzten Kreuzung die ermittelte Richtung fehlerhaft war. Wenn dies der Fall ist, kann eine neue Richtung vermutet werden. Nun muß überprüft werden, ob das Fahrzeug aus der Karte gefahren ist. In diesem Fall wird wieder zum Zustand *DriveOverBorder* gewechselt. Dies kann im Programmablaufplan in Abbildung 27 wiedergefunden werden.

Nun muß kontrolliert werden, ob es möglich ist, daß der Fahrer die vermutete Richtung gefahren ist. Bei Autobahnen darf beispielsweise nicht eine falsche Fahrtrichtung angenommen werden. Wenn die Fahrtrichtung gültig ist, kann nun die alternative Route errechnet und in der Hauptschleife die gefahrene Richtung ermittelt werden.

Konnte der gefundene Punkt nicht als Nachbarpunkt des Vorgängers zugeordnet werden, wird nach der Möglichkeit des Wendens geprüft. Hat das Fahrzeug gedreht, ist der gefundene Punkt auf derselben Kreuzung wie der zuletzt passierte. Nun darf nicht angenommen werden, daß das Fahrzeug auf einer Autobahn gewendet hat. Kann dies ausgeschlossen werden, wird erneut eine alternative Route errechnet.

Kann der gefundene Punkt immer noch nicht zugeordnet werden, wird dieser zunächst in *pos_found* gespeichert, damit bei einem Meßfehler nicht sofort auf eine neue Position in der Karte synchronisiert wird. Zu Beginn der Berechnung der alternativen Route ist die Variable des zunächst gefundenen Punktes mit 0 zu initialisieren.

Wird ein zweiter unbekannter Punkt gefunden, wird geprüft, ob dessen Kreuzung direkt mit der Kreuzung des gespeicherten Punktes verbunden ist. Wenn dies der Fall ist und es nach den Verkehrsregeln (Vorzeichen in der Karte) ferner möglich ist, die beiden gefundenen Punkte *pos_found* (zuerst gefundener Punkt) und *pos* (zuletzt gefundener Punkt) nacheinander zu passieren, kann davon ausgegangen werden, daß sich das Fahrzeug an der gemessenen Position in der Karte befindet. Nun kann für diese Position die alternative Route errechnet werden und in der Hauptschleife die Fahrtrichtung abgewartet werden.

War - z. B. bei Einbahnstraßen - eine Fahrt von *pos_found* nach *pos* nicht erlaubt, wird der zuletzt gefundene Punkt wieder zwischengespeichert.

Ferner muß immer geprüft werden, ob die Karte verlassen wurde.

Wird der im Fahrzeug vorliegende Kartenausschnitt verlassen, gibt es zwei mögliche Reaktionen: Die Anforderung einer neuen, dem Gebiet entsprechenden Karte oder die Rückführung in das bekannte Gebiet mit Hilfe einer Kompaß-Navigation. Die Funktionsweise der Kompaß-Navigation wird nachfolgend erläutert.

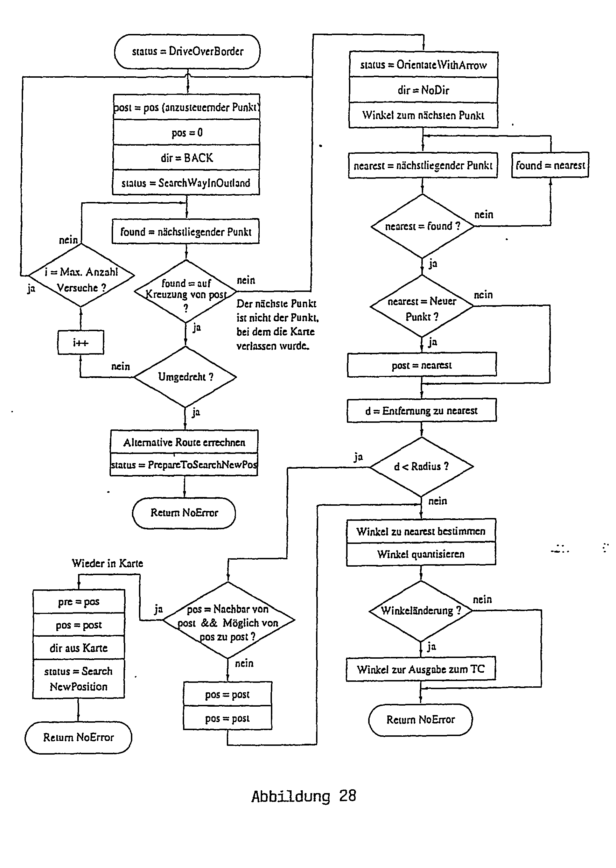

Da die Kompaß-Navigation möglichst lange umgangen werden soll, erhält der Fahrer bei Verlassen des Gebietes zunächst die Aufforderung zu wenden. Der anzusteuernde Punkt *post* wird, wie im Programmablaufplan der gesamten Kompaß-Navigation in Abbildung 28 zu sehen ist, mit dem zuletzt passierten Punkt *pos* gleichgesetzt. Dieser zuletzt passierte Punkt wird 0. Die zu fahrende Richtung *dir* ist *BACK*.

Nun wechselt das Programm in den Zustand *SearchWayInOutland*. Hier wird beobachtet, ob der Fahrer wirklich wendet. Dies geschieht nach dem gleichen Prinzip wie das Finden der Fahrtrichtung bei der fehlerfreien Navigation. Im Gegensatz zur Ermittlung der Fahrtrichtung wird hier kontinuierlich überwacht, ob das Fahrzeug wendet. Dabei wird die Anzahl der Versuche mitgezählt und bei einer festgelegten maximalen Anzahl von Versuchen zur Kompaß-Navigation übergegangen.

Während des Beobachtens, ob das Fahrzeug wendet, wird der von der direkten Entfernung nächstliegende Punkt der Karte gesucht. Dazu wird die Entfernung zu allen in der Karte befindlichen Punkten gemessen. Ist der Austrittspunkt der Karte nicht der nächstliegende Punkt, wird der nähere Punkt mit Hilfe des Kompaß anvisiert.

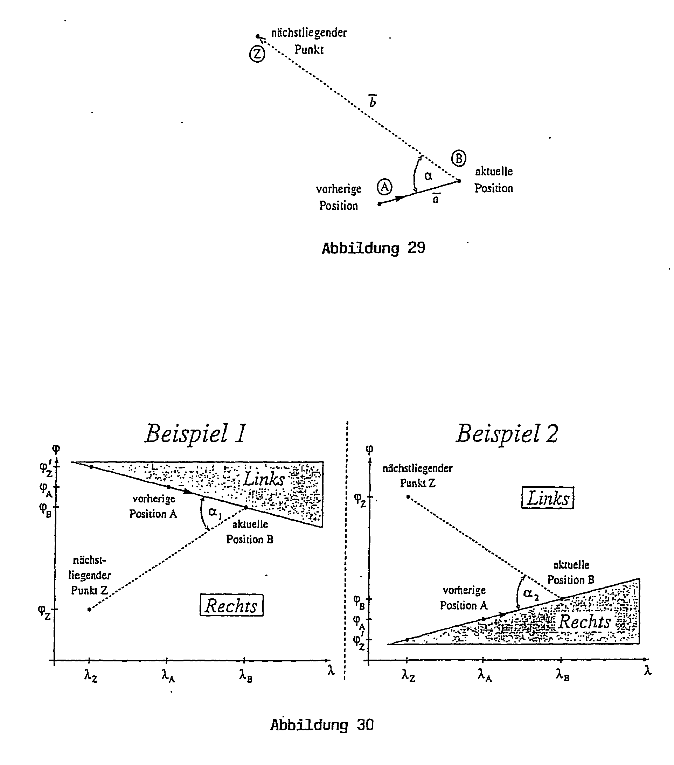

Wechselt das Programm zur Kompaß-Navigation, ist der anzuvisierende Punkt in *post* gespeichert. Um einen Richtungsweiser zu diesem Punkt darstellen zu können, ist - wie in Abbildung 29 zu sehen ist - der Winkel zwischen diesem Entfernungsvektor $\vec{b} = \vec{BZ}$ und der Fahrbewegung des Fahrzeugs $\vec{a} = \vec{AB}$ gesucht.

Da der aktuelle Standort B in beiden Vektoren vorkommt, wird dessen Längengrad als Bezugspunkt gewählt. Dadurch ergeben sich für die Punkte A, B und Z die in Gleichung 6 aufgezeigten kartesischen Koordinaten.

$$\vec{A} = \begin{pmatrix} R\cos(\varphi_A)\cos(\lambda_A - \lambda_B) \\ R\cos(\varphi_A)\sin(\lambda_A - \lambda_B) \\ R\sin(\varphi_A) \end{pmatrix} \qquad \vec{B} = \begin{pmatrix} R\cos(\varphi_B) \\ 0 \\ R\sin(\varphi_B) \end{pmatrix}$$

$$\vec{Z} = \begin{pmatrix} R\cos(\varphi_Z)\cos(\lambda_Z - \lambda_B) \\ R\cos(\varphi_Z)\sin(\lambda_Z - \lambda_B) \\ R\sin(\varphi_Z) \end{pmatrix} \qquad \begin{array}{l} mit \\ Breitengrad \quad \varphi \\ L\ddot{a}ngengrad \quad \lambda \end{array} \qquad (6)$$

Der Winkel a wird mir Hilfe des in Gleichung 7 gezeigten Skalarprodukts der beiden Differenzvektoren $\vec{a} = \vec{B} - \vec{A}$ und $\vec{b} = \vec{Z} - \vec{B}$ errechnet:

$$\cos(\alpha) = \frac{a_x b_x + a_y b_y + a_z b_z}{\sqrt{a_x^2 + a_y^2 + a_z^2}\sqrt{b_x^2 + b_y^2 + b_z^2}}$$

(7)

Da der arccos (*x*) einen Winkel zwischen 0 und 180˚ liefert, ist das Ergebnis nicht eindeutig. Wie in Abbildung 30 zu sehen ist, kann das Programm bei gegebenem Winkel nicht entscheiden, ob das Fahrzeug in die rechte oder linke Richtung steuern soll.

Daher wird ermittelt, ob der anzusteuernde Punkt rechts oder links vom Bewegungsvektor des Fahrzeugs liegt. Dazu werden die Breiten- und Längengrade der Erde in dem relevanten Gebiet als linear abhängig angenommen und die Geradengleichung $\varphi = m * \lambda + b$ aufgestellt. Dies ist möglich, da zwei Punkte der Geraden bekannt sind. Durch Bestimmung von *m* und *b* erhält man die Geradengleichung 8:

$$\varphi = f(\lambda) = \underbrace{\frac{\varphi_A - \varphi_B}{\lambda_A - \lambda_B}}_{m} * \lambda + \underbrace{\varphi_B - \frac{\varphi_A - \varphi_B}{\lambda_A - \lambda_B}}_{b} = \frac{\varphi_A - \varphi_B}{\lambda_A - \lambda_B} * (\lambda - \lambda_B) + \varphi_B$$

(8)

Durch Einsetzen von $\lambda_Z$ in die Geradengleichung erhält man $\phi'_Z$. Nun kann überprüft werden, ob $\varphi_Z$ über oder unter $\varphi'_Z$ liegt. Wird nun die Fahrtrichtung berücksichtigt, kann eine Aussage gemacht werden, ob $\varphi_Z$ links oder rechts von der Fahrbewegung liegt.

Diese wird über die Längengrade $\lambda_A$ und $\lambda_B$ ermittelt. Ist $\lambda_B > \lambda_A$ und $f(\lambda_Z) > \phi_Z$, liegt - wie Beispiel 1 in Abbildung 30 zeigt - der Punkt rechts vom Fahrzeug. Der Winkel kann unverändert übernommen werden.

Ist, wie in Beispiel 2, $\lambda_B > \lambda_A$ und $f(\lambda_Z) < \varphi_Z$, liegt der Punkt links vom Fahrzeug. Der Winkel muß nun negativ werden oder es kann, um bei positiven Vorzeichen zu bleiben, $\alpha \leftarrow 360˚ - \alpha$ gerechnet werden.

Ist $\lambda_B < \lambda_A$, fährt das Fahrzeug also bezogen auf die Längengrade in die andere Richtung. Daher wird unter der Bedingung $f(\lambda_Z) > \varphi_Z$ der Punkt links vom Fahrzeug liegen.

Die Simulation der Navigation soll die Funktionsweise des Programms "*route*" bzw. die Kommunikation zwischen ihm und dem TC auch ohne die Daten eines GPS-Empfängers demonstrieren. Dadurch ist zwar keine direkte Zuordnung der Instruktionen zur Umgebung gegeben, doch es können stationäre Demonstrationen für eine höhere Anzahl von Beobachtern durchgeführt werden.

Um diese Simulation durchzuführen, muß eine Simulationsdatei erstellt werden. Dazu werden die Daten des GPS-Empfängers mit Hilfe des Programms "*infile*" in eine Datei geschrieben. Nun kann während des Betriebs des Programms "*route*" das Einlesen der seriellen Schnittstelle auf diese Datei umgelenkt werden.

Der Betrieb der Simulation wird in der Konfigurationsdatei eingestellt. Hier muß auch der Dateiname mit Verzeichnis und die Taktrate, mit welcher die Daten aus der Similationsdatei eingelesen werden sollen, angegeben werden.

Im Rahmen der Erfindung wurde ein Navigationssystem vorgestellt, das ausschließlich auf Basis der Positionsbestimmung mit GPS beruht und keine weiteren Mechanismen benötigt. Somit kann ein schneller Einbau des Navigationssystems erfolgen. Das System kann ohne Aufwand für mehrere Fahrzeuge durch einfaches Umrüsten genutzt werden.

Ein weiterer Vorteil ist ferner, die Navigation mit einem möglichst kleinen Datenaufwand in einem Kartenausschnitt ausführen zu können. Dies wird mit einer gezielten Punktevergabe für die jeweiligen Enden einer auf der Karte befindlichen Straße erreicht. Die entstandene Kartenmatrix ist beliebig erweiterungsfähig, und es lassen sich leicht Ausschnitte für die befahrenen Gebiete erstellen. Durch den geringen Datenaufwand, der durch die Punktevergabe und durch den Gebrauch der Kartenausschnitte erreicht wird, ist eine drahtlose Übertragung des Kartenausschnittes zum Fahrzeug möglich. Der Datenaustausch kann somit zwischen einem Server und dem Navigationsprogramm erfolgen.

Die Berechnung der aus dem Kartenmaterial "best möglichen" Strecke basiert auf der Erstellung von Zielführungswerten zum Zielpunkt, die eine Fahrzeugführung aus jeder Position der Karte erlauben. Sie ergeben einen guten Kompromiß zwischen Länge der Wegstrecke und Dauer der Fahrzeit, da z.B. bei Autobahnen, auf denen schneller gefahren werden kann, nicht so viele Zielführungswerte gebraucht werden. Bei vermeintlich kürzeren Strecken durch die Stadt sind viele abzweigende Straßen zu erwarten, was wiederum viele Zielführungswerte bedeutet und somit u.U.

nicht den Vorzug gegenüber der Autobahn erhält.

Diese Routenberechnung kann zu einem Anbieter für mobile Dienste ausgelagert werden, um einerseits die Hardwareanforderung im Fahrzeug zu minimieren und andererseits aktuelle Verkehrsinformationen und -prognosen in die Kalkulation mit einfließen zu lassen. Dazu können einfach Straßen gesperrt werden oder deren Durchfahrt mit Erhöhung der entsprechenden Zielführungswerte bei Staus, Baustellen etc. erschwert werden. Straßenabschnitte oder auch gesamte Straßen können dafür als zusammenhängend erkannt werden.

Daß zur Minimierung der Daten lediglich ein Kartenausschnitt existiert, kann für den Benutzer u.U. jedoch störende Einwirkungen haben. Ist das Fahrzeug über den Rand der Karte gefahren, kann nicht mehr navigiert werden. Wird zur Navigation eine neue Karte angefordert, kostet dies dem Fahrzeugführer Zeit und Geld. Die verwendete Kompaßnavigation stellt zwar einen Kompromiß dar, ist für den Anwender jedoch nicht komfortabel, da der Pfeil nur als Unterstützung der Orientierung dient und dem Fahrer keine Instruktionen geben kann.

Die direkte Verbindung eines Navigationssystems mit dem Mobilfunk-Dienste-Anbieter erleichtert aber die Weiterentwicklung und Durchführung verwandter Anwendungen wie Notruf bzw. Pannenhilfe, Diebstahlschutz, "Floating Car Data"-Konzepte, Ferndiagnose und -wartung oder verkehrsunabhängige Informationsdienste. Werden die zu sendenden Daten weiter komprimiert oder sogar andere Übertragungssysteme, die mit einer höheren Übertragungsrate ausgestattet sind, eingesetzt, kann ein größerer Kartenausschnitt gesendet werden. Dieser kann ein mehrfaches Fehlverhalten des Fahrers erlauben.

**Patentansprüche**

1. Verfahren zur Navigation eines Objekts von einer aktuellen Position zu einem Zielpunkt (ZIEL) entlang von Verkehrswegen (S), die in einem elektronisch gespeicherten Verkehrswegeplan (K) enthalten sind, wobei

   - die im elektronisch gespeicherten Verkehrswegeplan (K) enthaltenen Verkehrswege (S) mit Zielführungspunkten (P) belegt werden,

   **dadurch gekennzeichnet, daß**

   - den Zielführungspunkten (P) Zielführungswerte (W) zugeordnet werden, die sich ausgehend vom Zielpunkt (ZIEL) mit steigendem Abstand von diesem entweder nur vergrößern oder nur verkleinern; und
   - die Navigation des Objekts unter Heranziehung der nur sich verkleinernden oder der nur sich vergrößernden Zielführungswerte (W) erfolgt.

2. Verfahren nach Anspruch 1, **dadurch gekennzeichnet, daß** die Zielführungspunkte (P) den Verkehrswegen (S) fest zugeordnet werden.

3. Verfahren nach Anspruch 1 oder 2, **dadurch gekennzeichnet, daß** Zielführungspunkte (P) im Bereich der Einmündungen von Verkehrswegeverzweigungen positioniert werden.

4. Verfahren nach einem der Ansprüche 1 bis 3, **dadurch gekennzeichnet, daß** Zielführungspunkte (P) im Bereich von Abknickstellen bzw. Kurven der Verkehrswege (S) positioniert werden.

5. Verfahren nach einem der Ansprüche 1 bis 4, **dadurch gekennzeichnet, daß** entlang längerer verzweigungsfreier Abschnitte von Verkehrswegen (S) mehrere hintereinanderliegende Zielführungspunkte (P) in diesen Abschnitten verteilt positioniert werden.

6. Verfahren nach einem der Ansprüche 1 bis 5, **dadurch gekennzeichnet, daß** die Zuordnung der Zielführungswerte (W) zu den Zielführungspunkten (P) streckenweise erfolgt.

7. Verfahren nach einem der Ansprüche 1 bis 6, **dadurch gekennzeichnet, daß** die Zuordnung der Zielführungswerte (W) zu den Zielführungspunkten (P) unter Berücksichtigung der Art des Verkehrsweges (S) in der Umgebung des jeweiligen Zielführungspunktes (P) erfolgt.

8. Verfahren nach Anspruch 1 oder 7, **dadurch gekennzeichnet, daß** die Art des Verkehrsweges (S) im Bereich eines Zielführungspunktes (P) durch einen mehrdimensionalen Vektor bestimmt wird.

9. Verfahren nach einem der Ansprüche 1 bis 8, **dadurch gekennzeichnet, daß** der Verkehrswegeplan (K) im Objekt gespeichert ist und dort innerhalb eines Planausschnitts die Zuordnung der Zielführungwerte (W) zu den Zielführungspünkten (P) erfolgt.

10. Verfahren nach einem der Ansprüche 1 bis 9, **dadurch gekennzeichnet, daß** der Verkehrswegeplan (K) bei einem Serviceprovider gespeichert ist und dort innerhalb eines Planausschnitts die Zuordnung der Zielführungwerte (W) zu den Zielführungspunkten (P) erfolgt.

11. Verfahren nach Anspruch 10, **dadurch gekennzeichnet, daß** der Planausschnitt des so ergänzten Verkehrswegeplans (K) auf Anforderung vom Serviceprovider zum Objekt übertragen wird.

12. Verfahren nach Anspruch 9. 10 oder 11, **dadurch gekennzeichnet, daß** die Größe des Planausschnitts durch die Positionen von Start- und Zielpunkt festgelegt wird.

13. Verfahren nach einem der Ansprüche 9 bis 12, **dadurch gekennzeichnet, daß** bei Verlassen des Planausschnitts durch das Objekt ein neuer Planausschnitt aufgerufen wird, in welchem die Zuordnung der Zielführungswerte zu den Zielführungspunkten im Hinblick auf den alten Zielpunkt und einen neuen Startpunkt erfolgt.

14. Verfahren nach einem der Ansprüche 9 bis 12, **dadurch gekennzeichnet, daß** bei Verlassen des Planausschnitts durch das Objekt eine Kompaßnavigation zurück zum Planausschnitt erfolgt.

15. Verfahren nach einem der Ansprüche 9 bis 14, **dadurch gekennzeichnet, daß** die Übertragung des Planausschnitts über eine Funktelefonstrecke (10) erfolgt.

16. Verfahren nach einem der Ansprüche 1 bis 15, **dadurch gekennzeichnet, daß** als Objekt ein Kraftfahrzeug zum Einsatz kommt, das in der Lage ist, seine tatsächliche geographische Position zu erkennen.

17. Verfahren nach Anspruch 16, **dadurch gekennzeichnet, daß** das Kraftfahrzeug seine tatsächliche geographische Position von einem mitgeführten GPS-Empfänger erhält.

18. Verfahren nach einem der Ansprüche 1 bis 15, **dadurch gekennzeichnet, daß** als Objekt ein Funktelefon zum Einsatz kommt, das in der Lage ist, seine tatsächliche geographische Position zu erkennen.

**Claims**

1. Method of navigating an object from a current position to a destination point (DESTINATION) along traffic routes (S) contained in an electronically stored traffic route map (K), whereby

   - traffic routes (S) in the electronically stored route map (K) are tagged with destination guide points (P),

   **characterised in that**

   - destination guide values (W) are assigned to the destination guide points (P) which, starting from the destination point (DESTINATION), either increase only or decrease only the greater distance they are from it; and
   - the object is navigated by applying only decreasing or only increasing destination guide values (W).

2. Method as claimed in claim 1, **characterised in that** the destination guide points (P) are fixedly assigned to the traffic routes (S).

3. Method as claimed in claim 1 or 2, **characterised in that** destination guide points (P) are positioned in the region of junctions of traffic route crossroads.

4. Method as claimed in one of claims 1 to 3, **characterised in that** destination guide points (P) are positioned in the region of bends or turns of the traffic routes (S).

5. Method as claimed in one of claims 1 to 4, **characterised in that**, along longer sections of traffic routes (S) with no junctions, several destination guide points (P) are positioned one after the other distributed in these sections.

**EP 1 030 166 B1**

**6.** Method as claimed in one of claims 1 to 5, **characterised in that** the destination guide values (W) are assigned to the destination guide points (P) on the basis of routes.

**7.** Method as claimed in one of claims 1 to 6, **characterised in that** the destination guide values (W) are assigned to the destination guide points (P) taking account of the nature of the traffic route (S) in the area around the respective destination guide point (P).

**8.** Method as claimed in claim 1 or 7, **characterised in that** the nature of the traffic route (S) in the region of a destination guide point (P) is determined by a multidimensional vector.

**9.** Method as claimed in one of claims 1 to 8, **characterised in that** the traffic route map (K) is stored in the object, where the destination guide values (W) are assigned to the destination guide points (P) within a map section.

**10.** Method as claimed in one of claims 1 to 9, **characterised in that** the traffic route map (K) is stored with a service provider, where the destination guide values (W) are assigned to the destination guide points (P) within a map section.

**11.** Method as claimed in claim 10, **characterised in that** the map section of the traffic route map (K) thus updated is transmitted by the service provider to the object on request.

**12.** Method as claimed in claim 9, 10 or 11, **characterised in that** the size of the map section is fixed by the positions of the starting and destination points.

**13.** Method as claimed in one of claims 9 to 12, **characterised in that**, when the object leaves the map section, a new map section is retrieved in which the destination guide values are assigned to the destination guide points by reference to the old destination point and a new starting point.

**14.** Method as claimed in one of claims 9 to 12, **characterised in that**, when the object leaves the map section, a compass navigation is run to return to the map section.

**15.** Method as claimed in one of claims 9 to 14, **characterised in that** the map section is transmitted via a mobile telephone route (10).

**16.** Method as claimed in one of claims 1 to 15, **characterised in that** a motor vehicle is used as the object, which is able to detect its actual geographic position.

**17.** Method as claimed in claim 16, **characterised in that** the motor vehicle obtains its actual geographic position from a GPS receiver which it carries with it.

**18.** Method as claimed in one of claims 1 to 15, **characterised in that** a mobile telephone is used as the object, which is capable of detecting its actual geographic position.


**Revendications**

**1.** Procédé de navigation d'un objet à partir d'une position actuelle jusqu'à une destination (DESTINATION) le long de voies de circulation (5), lesquelles sont contenues dans un plan (K) de voies de circulation mémorisé de manière électronique,

- les voies de circulation (S) contenues dans le plan de voies de circulation (K) mémorisé de manière électronique étant pourvues de points de guidage (P),

**caractérisé en ce que**

- les points de guidage (P) sont associés à des valeurs de guidage (W), lesquelles soit augmentent uniquement soit diminuent uniquement en partant du point de destination (DESTINATION) avec une distance croissante par rapport à celui-ci et
- la navigation de l'objet s'effectue en recourant aux valeurs de guidage (W) qui uniquement diminuent ou qui uniquement augmentent.

**2.** Procédé selon la revendication 1, **caractérisé en ce que** les points de guidage (P) sont associés de manière fixe à des voies de circulation (S).

**3.** Procédé selon la revendication 1 ou 2, **caractérisé en ce que** les points de guidage (P) sont positionnés dans la zone des jonctions d'embranchement de voies de circulation.

**4.** Procédé selon l'une quelconque des revendications 1 à 3, **caractérisé en ce que** les points de guidage (P) sont positionnés dans la zone des tournants ou bien des virages des voies de circulation (S).

**5.** Procédé selon l'une quelconque des revendications 1 à 4, **caractérisé en ce que** le long des sections sans embranchement plus longues des voies de circulation (S) plusieurs points de guidage (P) placés les uns derrière les autres sont positionnés de manière à être répartis dans ces sections.

**6.** Procédé selon l'une quelconque des revendications 1 à 5, **caractérisé en ce que** l'attribution des valeurs de guidage (W) aux points de guidage (P) s'effectue sur une partie du parcours.

**7.** Procédé selon l'une quelconque des revendications 1 à 6. **caractérisé en ce que** l'attribution des valeurs de guidage (W) aux points de guidage (P) s'effectue en tenant compte du type de la voie de circulation (S) dans l'environnement de chaque point de guidage (P).

**8.** Procédé selon la revendication 1 ou 7, **caractérisé en ce que** le type de la voie de circulation (S) est déterminé dans la zone d'un point de guidage (P) par un vecteur multidimensionnelle.

**9.** Procédé selon l'une quelconque des revendications 1 à 8, **caractérisé en ce que** le plan des voies de circulation (K) est mémorisé dans l'objet, et dans celui-ci à l'intérieur d'une section de plan il est effectué l'attribution des valeurs de guidage (W) aux points de guidage (P).

**10.** Procédé selon l'une quelconque des revendications 1 à **9, caractérisé en ce que** le plan des voies de circulation (K) est mémorisé par un fournisseur de services, et à l'intérieur d'une section de plan il est effectué l'attribution des valeurs de guidage (W) aux points de guidage (P).

**11.** Procédé selon la revendication 10, **caractérisé en ce que** la section de plan du plan des voies de circulation (K) ainsi complété est transféré sur demande du fournisseur de service à l'objet.

**12.** Procédé selon la revendication 9, 10 ou 11, **caractérisé en ce que** la dimension de la section de plan est déterminée par les positions des points de destination et de départ.

**13.** Procédé selon l'une quelconque des revendications 9 à 12, **caractérisé en ce que** lorsqu'on quitte la section de plan par l'objet, une nouvelle section de plan est appelée, dans laquelle il est effectué l'attribution des valeurs de guidage aux points de guidage en tenant compte de l'ancienne destination et du nouveau point de départ.

**14.** Procédé selon l'une quelconque des revendications 9 à 12, **caractérisé en ce que** lorsqu'on quitte la section de plan par l'objet, une navigation à la boussole est effectuée en retournant à la section de plan.

**15.** Procédé selon l'une quelconque des revendications 9 à 14, **caractérisé en ce que** le transfert de la section de plan s'effectue par une liaison radiotéléphonique (10).

**16.** Procédé selon l'une quelconque des revendications 1 à 15, **caractérisé en ce qu'**on utilise un véhicule en tant qu'objet qui peut reconnaître sa position géographie réelle.

**17.** Procédé selon la revendication 16, **caractérisé en ce que** le véhicule obtient sa position géographie réelle par un récepteur GPS intégré.

**18.** Procédé selon l'une quelconque des revendications 1 à 15, **caractérisé en ce qu'**un radiotéléphone est utilisé en tant qu'objet, qui peut reconnaître sa position géographique réelle.

EP 1 030 166 B1

Ein- und Ausgabe | skalierbarer Teil 6 | struktureller Teil 5 | Anwendungen

Visueller Part ~6a

Taktieler Part ~6b

Audio-Part ~6c

TC ~5

Datenbank ~8

Applikation I

Applikation Navigation GPS ~NAV

Applikation N

Abbildung 1

31

Abbildung 2

Abbildung 3

Abbildung 4

Abbildung 5

EP 1 030 166 B1

Abbildung 6

Abbildung 7

Abbildung 8

Abbildung 9

Abbildung 10

Abbildung 11

Abbildung 12

38

Fahrzeug 2

16: 3

17: 3

15 16 0 17 10

15: 2

10 x x x -11

14: 3

Fahrzeug 1

— Ziel 1 — 10: 1 — Autobahn — 11: 2 — 12: 3 — 13: 4 —

32: 7 — 33: 7 — 34: 4 —

28: 5 — 29: 4

30: 3 — 31: 3

27: 6

26: 5

22: 2

Fahrzeug 3

24: 5

Schnellstraße

25: 4

23: 5

20: 1

21: -

Ziel 2

Abbildung 13

Abbildung 14

Abbildung 15

GPS-Position
des Fahrzeuges

Abbildung 16

status = FindStartPosition

status = FindStartDirection

akt. GPS-Position x messen

i = 0

In Radius von Punkt A || B ? — ja

(i++) < Anzahl Punkte ? — nein

nein

akt. Position $x_{neu}$ messen

Distanz $x - x_{neu}$ messen

In Radius von Punkt A ? — nein

ja

A = point[i][HIMSELF]

B = point[i][BACK]

pos = B

nein

B != 0 ?

status = Find StartPosition

nein

Distanz > dist_to_find_start ?

ja

pos = A

ja

Distanz $\overline{AB}$ errechnen

Distanz $\overline{Ax}$ errechnen

Distanz $\overline{Bx}$ errechnen

status = FindDrivenDirection

$\Delta A = \overline{Ax} - \overline{Ax_{neu}}$

$\Delta B = \overline{Bx} - \overline{Bx_{neu}}$

...

Return NoError

nein

$\overline{Ax} < \overline{AB}$ && $\overline{Bx} < \overline{AB}$ ?

ja

$\Delta A < 0$ && $\Delta B > 0$ ? — ja

d = Abstand von x zu $\overline{AB}$

pos = B

post = A

nein

nein

$\Delta A > 0$ && $\Delta B < 0$ ? — ja

d < d_min ?

ja

nein

pos = A

post = B

A, B, $\overline{Ax}$, $\overline{Bx}$ speichern

nein

(Versuche++) = Max_Versuche ?

ja

status = PrepareToSearchNewPosition

Return NoStart

Return NoError

Abbildung 17

16: 5         17: 4     18: 4

19: 3

20: 4

Abbildung 18

1. Instruktion       2. Instruktion       3. Instruktion

$r_1$

$r_2$

$r_3$

Abbildung. 19

Abbildung 20

| Differenz der Winkel | Richtung bei ε = 50° |
|---|---|
| 0° - 40° | geradeaus |
| 40° - 140° | rechts |
| 140° - 220° | umgedreht |
| 220° - 320° | links |
| 320° - 360° | geradeaus |

Abbildung 21

$\text{dir}_B = \beta - \alpha$
$= 24,5° - 20°$
$= 4,5°$
$\rightarrow$ geradeaus

$\text{dir}_C = \chi - \alpha$
$= 115,6° - 20°$
$= 95,6°$
$\rightarrow$ rechts

$\text{dir}_D = \beta - \alpha$
$= -43,3° - 20°$
$= -63,3° = 296,7°$
$\rightarrow$ links

Abbildung 22

status = FindDrivenDirection

akt. GPS-Position x messen

nein

x = auserhalb des Radius ?

ja

pos || post = Autobahn ?

ja

nein

$\alpha_a$ = akt. Ausrichtung zu Norden

$\alpha_c$ = Ausrichtung zu Norden vor Eintritt in den Radius

$\Delta \alpha = \alpha_a - \alpha_c$

$\Delta \alpha < 0$ ?

nein

ja

$\Delta \alpha = \Delta \alpha + 360°$

$\Delta \alpha < 40°$ || $\Delta \alpha > 320°$ ?

ja

nein

drived_dir = STRAIGHT

$\Delta \alpha > 40°$ && $\Delta \alpha < 140°$ ?

ja

nein

drived_dir = RIGHT

$\Delta \alpha > 220°$ && $\Delta \alpha < 320°$ ?

ja

nein

drived_dir = dir

drived_dir = LEFT

drived_dir = BACK

pre = pos

pos = point[post][drived_dir]

post = point[pos][BACK]

pos = dest ?

ja

nein

status = PrepareToSearchNewPos

status = ReachedDestination

Return NoError

Return NoError

Abbildung 23

46

*Hauptschleife für fehlerloses Navigieren*      *Reaktionen auf Fehlverhalten bzw. Meßfehler*

Abbildung 24

**Abbildung 25**

**Abbildung 26**

Abbildung 27

Abbildung 28

**Abbildung 29**

**Abbildung 30**